(19) Europäisches Patentamt
European Patent Office
Office européen des brevets

(11) **EP 2 383 974 B1**

(12) **EUROPÄISCHE PATENTSCHRIFT**

(45) Veröffentlichungstag und Bekanntmachung des Hinweises auf die Patenterteilung:
**03.10.2012 Patentblatt 2012/40**

(51) Int Cl.:
***H04N 1/62*** *(2006.01)*

(21) Anmeldenummer: **10161660.5**

(22) Anmeldetag: **30.04.2010**

(54) **Bildverarbeitungsmittel, insbesondere in einer Farbkamera, mit universellem Farboperator**

Image processing tool, in particular in a colour camera, with universal colour operator

Moyen de traitement d'image, notamment dans une caméra couleur, à l'aide d'un opérateur de couleur universel

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**02.11.2011 Patentblatt 2011/44**

(73) Patentinhaber: **Basler AG**
**22926 Ahrensburg (DE)**

(72) Erfinder: **Kunze, Jörg**
**22926, Ahrensburg (DE)**

(74) Vertreter: **Eisenführ, Speiser & Partner**
**Johannes-Brahms-Platz 1**
**20355 Hamburg (DE)**

(56) Entgegenhaltungen:
**US-A1- 2006 203 297     US-A1- 2007 121 180**
**US-B1- 6 337 692**

**Beschreibung**

Die vorliegende Erfindung betrifft eine Farbkamera, insbesondere eine digitale Farbkamera, gemäß Anspruch 1.

**Hintergrund**

Die spektrale Empfindlichkeit elektronischer Bildsensoren weicht im Allgemeinen von einer idealen spektralen Empfindlichkeit ab, z.B. von der des menschlichen Auges oder von der eines bestimmten technischen Wiedergabegerätes, wie z.B. eines Monitors oder eines Druckers. Daraus resultieren Farbfehler in dem Sinne, dass ein vom Bildsensor ausgegebener RGB-Farbvektor nicht die Farbe wiedergibt, die die zugeordnete, räumlichen Stelle im Bild aufweist, insbesondere ein menschlicher Betrachter oder ein ideales technisches Messgerät erkennen würde. Dabei werden Fehler des Farbtons von einem Betrachter als besonders störend empfunden. Auch Fehler in Farbton und Farbhelligkeit sind störend.

Es sind zahlreiche Verfahren bekannt, Farbfehler in digitalen Bildern zu korrigieren. Eine große Zahl dieser Verfahren arbeitet linear auf dem gesamten Farbraum unabhängig von der Zuordnung eines zu korrigierenden Farbvektors zu einem Farbbereich.

US 5 668 596 offenbart eine Kamera vor, in der ein zu korrigierender RGB-Farbvektor mittels einer 3x3 Matrix multipliziert und dadurch ein korrigierter Farbvektor erhalten wird.

Die US 6 338 692 B1 zeigt ein Verfahren zur Farbkorrektur bei einem im Farbtonraum betrachteten Bild, wobei ein Benutzer mehrere Korrektur-Maßnahmen miteinander kombinieren kann, und wobei ein Farbton-Kennwert zusammen mit einem Sättiaunas- bzw, Helligkeitskennwert genutzt werden kann, um Gewichtunasparameter zum Mischen von ursprünglichen Farbwerten mit Korrekturfarbwerten festzulegen.

Die US 2007/121180 A1 zeigt eine Vorrichtung und ein Verfahren zum Einstellen der Farbsättigung, bei welchem die Klarheit bestimmter Farbanteile gesenkt werden und gleichzeitig die Klarheit andere Farbanteile erhöht werden kann, um einem Benutzer zu ermöglichen, nur bestimmte Farbanteile einzustellen.

Die US 2006/203297 A1 zeigt eine Vorrichtung und ein Verfahren zum Einstellen der Farbsättigung, bei welchem ein Sättigungsparameter genutzt wird, wobei für einen jeweiligen Sättigungswert eine Subtraktion erfolgt und ein erhaltener Differenzwert erhöht wird, so dass eine Umwandlung der Bilddaten nicht mehr erforderlich ist, um die Verarbeitung von Sättigungswerten zu vereinfachen.

Die US 2004/263456 A1 zeigt ein Display mit vorgeschaltetem Farbkonvertierungsschaltkreis, welcher die Primärfarbanteile von Farbvektoren in Abhängigkeit von ihrer Zugehörigkeit zu Farbbereichen umrechnet. Die Zugehörigkeit zu den Farbbereichen wird dabei anhand der Grössenverhältnisse der Primärfarbanteile bestimmt, und der kleinste Primärfarbanteil bleibt unverändert.

Weiterhin sind Verfahren bekannt, die mit einer sogenannten Look-Up-Table (LUT) arbeiten. Hierbei wird ein korrigierter Farbvektor, der einem zu korrigierenden Farbvektor entspricht, aus einer Tabelle ausgelesen. Dadurch lassen sich auch nichtlineare Operationen realisieren. Hierbei ist es auch bekannt, Zwischenwerte zwischen den in der LUT gespeicherten Werten zu interpolieren. Die genannten Verfahren werden insbesondere bei der Anwendung sogenannter Farbprofile benutzt.

Nachteilig an den vorstehend genannten linearen Verfahren ist, dass sie jeweils auf dem gesamten Farbraum arbeiten. D.h., es ist nicht auf einfache Weise möglich, nur eine bestimmte Farbe zu korrigieren, ohne dass andere Farben davon auf möglicherweise nachteilige Weise verändert werden. Allen genannten Verfahren haben den Nachteil, dass es einem Benutzer zumindest nicht auf einfache Weise möglich ist, Korrekturwerte ohne besonderes Fachwissen selbst anzupassen, da jeweils eine Vielzahl von Koeffizienten unter Berücksichtigung mathematischer Zusammenhänge zu berechnen ist.

Ein bekanntes Verfahren zur Farbfehlerkorrektur ist in der der deutschen Version 2.6.6 des Open-Source Programmes GIMP ("Gnu Image Manipulation Program", www.gimp.org) in Form einer Korrektur für "Farbton/Sättigung" implementiert. GIMP unterscheidet die sechs Farben Rot (R), Gelb (Y), Grün, (G), Cyan (C), Blau (B) und Magenta (M), wobei für jede dieser sechs Farben ein Benutzer jeweils einen Korrekturwert für den Farbton (dSHR, dSHY, dSHG, dSHC, dSHB, dSHM), einen Korrekturwert für die die Farbsättigung (dHSR, DHSY, DHSG, dHSC, dHSB. dHSM) und einen Korrekturwert für die Hellig-keit (dVR, dVY, dVG, dVC, dVB, dVM) eingeben kann. Weiterhin ist die Eingabe eines globalen Korrekturwertes für den Farbton, für die Farbsättigung und für die Helligkeit möglich.

Als nachteilig an der in GIMP implementierten Lösung erscheint folgender Sachverhalt: Wird die GIMP Farbkorrektur auf Bilddaten eines Bildes angewandt und werden dabei für eine erste und eine zweite Farbe deutlich verschiedene Korrekturwerte gewählt, wenn die erste und die zweite Farbe entsprechend der Farbabfolge R-Y-G-C-B-M-R aneinander angrenzen, so können bei Bildern mit weichen Farbübergängen von der ersten Farbe zu der zweiten Farbe Artefakte durch harte Farbkanten im Bild auftreten.

Auf einer Fläche mit weichen Farbübergängen weisen Farbvektoren, deren zugeordnete Positionen im Bild räumlich dicht beieinander liegen, Farben auf, deren Farbabstand gering ist. Eine harte Farbkante entsteht, wenn räumlich dicht beieinander liegende Farbvektoren einen erheblichen Farbabstand zueinander aufweisen, wobei unter dem Farbabstand hier der euklidische Abstand im von den Primärfarben aufgespannten Farbraum verstanden wird.

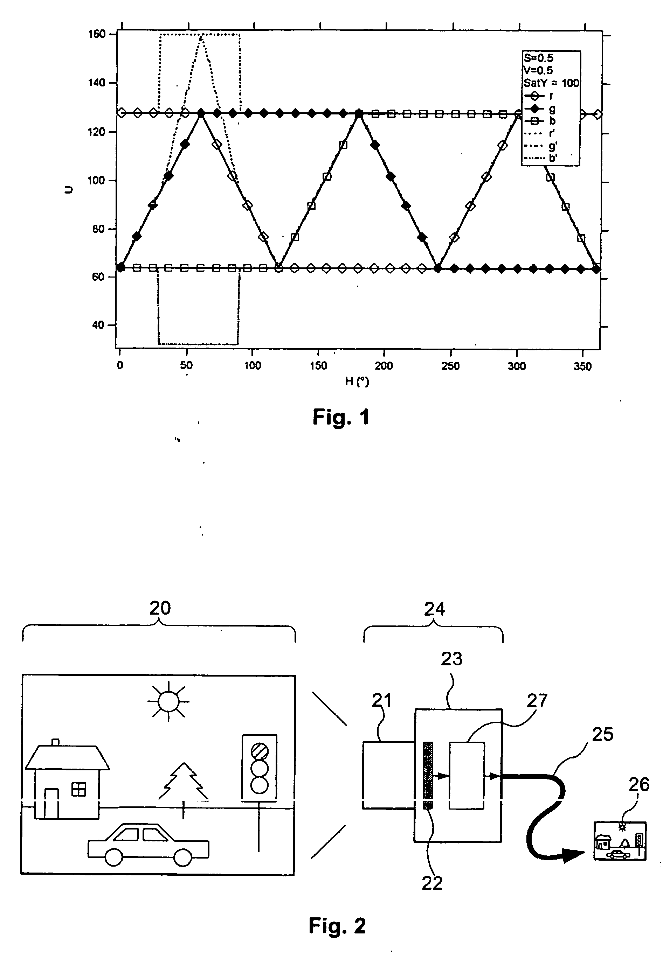

In Fig. 1 stellt die Primärfarbkomponenten r (rot), g (grün) und b (blau) von Farbvektoren <r, g, b> , die jeweils bei Übertragung in den bekannten HSV Farbraum einen Sättigungs-Wert (S) von 50% und einen Helligkeits-Wert (H) von 50% besitzen, über einem von 0° bis 360° durchlaufenden Farbton-Wert dar. Im HSV-Farbraum setzt sich ein Farbvektor aus den Komponenten Hue (Farbton), Saturation (Sättigung) und Value (Helligkeit bzw. Grauwert), wobei bekanntlich der Farbton in Winkelgrad und die Sättigung sowie die Helligkeit prozentual angegeben.

Auf die in Fig. 1 dargestellten Primärfarbkomponenten r, g und b der Farbvektoren wurde eine Farbkorrektur mit dem Wert 100 für die Sättigung-Y, d.h. die Sättigung der Farbe Gelb, unter Verwendung der oben genannten Software GIMP durchgeführt und als Ergebnis zugeordnete korrigierte Farbvektoren <r', g', b'> erhalten. Die korrigierten Primärfarbkomponenten r', g' und b' sind in Fig. 1 jeweils wieder über dem Farbton-Wert dargestellt, der auch dem jeweiligen Ausgangsfarbvektor <r, g, b> zugeordnet ist. Der Wertebereich ist der Arbeitsweise von GIMP angepasst.

Zu erkennen ist an der Stelle H = 29° eine sprunghafte Änderung von r' und b' über H sowie an der Stelle H = 90° eine sprunghafte Änderung von g' und b' über H. Daraus können in Bildern jeweils nachteilige harte Farbkanten resultieren. Es ist ersichtlich, dass GIMP mit Farbbereichen arbeitet, wobei sich der Farbbereich, der der Farbe Gelb (Y) zugeordnet ist, sich von H = 29° bis H = 90° erstreckt.

Wird eine wie GIMP arbeitende Farbkorrektur darüber hinaus auf Bilddaten einer zeitlichen Folge von Bildern angewandt, so kann ein unvermeidbar in den Bilddaten enthaltenes Rauschen dazu führen, dass ein Bildpunkt bzw. Pixel mit einer Farbe, die dicht am Rand eines Farbbereiches liegt, in zufälliger Folge entweder diesem ersten oder einem daran angrenzenden, zweiten Farbbereich zugeordnet wird. Dies liegt begründet in der Unstetigkeit der Wirkung der Farbkorrektur nach GIMP an der Grenze vom ersten zum zweiten Farbbereich. Dadurch werden in zufälliger Folge verschiedene Korrekturwerte auf diesen Pixel angewandt. Dadurch entsteht beim Betrachten der korrigierten Bilddaten bei als zeitlich aufeinander folgenden, bewegten Bildern in Form eines Filmes oder einer Echtzeitdarstellung ein vom Betrachter als Blinken empfundenes Rauschen des Pixels. Dies wird als besonders störend empfunden.

Somit kann eine Aufgabe der vorliegenden Erfindung darin gesehen werden, eine Bildverarbeitungsmittel für eine Kamera, insbesondere ein in die Kamera integriertes Bildverarbeitungsmittel bereitzustellen, mittels dem Farbfehler der Kamera für Farbbereiche korrigiert werden können, ohne dass die oben beschriebenen nachteiligen Bildartefakte auftreten. Bevorzugt soll das Bildverarbeitungsmittel eine Schnittstelle bieten, über die ein Benutzer leicht, bevorzugt mit geringem Vorwissen, die Korrekturmöglichkeiten anwenden bzw. bedienen kann. Des Weiteren ist es wünschenswert, dass das der Korrektur zugrundeliegende Verfahren in möglichst vielen Kameras unabhängig von deren exakten technischen Eigenschaften einsetzbar ist.

## Kurze Beschreibung einer Lösung

Die oben genannte Aufgabe wird durch ein Bildverarbeitungsmittel gemäß Anspruch 1, insbesondere eine Farbkamera mit einem solchen Bildverarbeitungsmittel gemäß Anspruch 13 gelöst. Vorteilhafte Weiterbildungen und Ausführungsbeispiele sind in jeweiligen zugeordneten Unteransprüchen angegeben.

Ein erfindungsgemäßes Bildverarbeitungsmittel weist wenigstens eine Schnittstelle, die mit dem Bildverarbeitungsmittel gekoppelt ist, auf, die zur Einstellung bzw. Änderung wenigstens eines Parameters für eine Korrektur wenigstens der Farbsättigung und ggf. zusätzlich des Farbtons und/oder der Helligkeit als Eigenschaften eines Farbbereiches, der einer ersten Farbe zugeordnet ist, im Bildverarbeitungsmittel eingerichtet ist.

Erfindungsgemäß ist das Bildverarbeitungsmittel eingerichtet, einen Farbvektor, welcher dem Farbbereich angehört, in einen korrigierten Farbvektor zu ändern, indem bei einer Änderung des Parameters, die einer Erhöhung oder Erniedrigung des zugeordneten Parameters zugeordnet ist, jeweils bestimmte Primärfarbanteile des Farbvektors entsprechend vorbestimmter Vorschriften bzw. mittels vorbestimmter Operatoren geändert werden.

Bevorzugt ist die Wirkung der erfindungsgemäßen Korrektur(en) für solche Farben eines Farbvektors, die einen geringen Farbabstand zu der ersten Farbe aufweisen, größer als für solche Farben eines Farbvektors, die einen größeren Farbabstand zu der ersten Farbe aufweisen. Bevorzugt werden Farbvektoren, die dem Farbbereich nicht angehören, unverändert belassen.

Allgemein sei an dieser Stelle angemerkt, dass unter Bildverarbeitungsmittel jegliche Umsetzung in Form einer funktionale elektronischen Schaltung verstanden werden kann, mittels der die jeweils erfindungsgemäßen Verarbeitungsschritte bzw. Bearbeitungsschritte von Bilddaten durchgeführt werden können. D.h., ein Bildverarbeitungsmittel kann ein programmierbare Schaltung sein, wie ein Prozessor, insbesondere Mikroprozessor oder spezialisierter digitaler Signalprozessor, aber auch ein konfigurierter bzw. konfigurierbarer Baustein oder eine fest verdrahte Logik sein.

Der Kerngedanke der hier vorgestellten Lösung besteht in der Erkenntnis sowie den darauf aufbauenden Überlegungen, dass es bei einer Farbkorrektur eines zu korrigierender Farbvektors x (insbesondere bei einer Korrektur der Farbsättigung, bei der solche Parameter benutzt werden, die einer bestimmten ersten Farbe und einem dieser Farbe zugeordneten Farbbereich zugeordnet sind) vorteilhaft ist, wenn die Wirkung der Farbkorrektur nicht (i) über den gesamten Farbbereich konstant erfolgt, insbesondere nicht (ii) an inneren Rändern des Farbbereiches unstetig endet. Bevorzugt nimmt die Wirkung von der ersten Farbe aus zu den inneren Rändern des Farbbereichs stetig ab, bis sie besonders bevorzugt an den inneren Rändern Null erreicht. Dadurch wird auf vorteilhafte Weise sichergestellt, dass die Wirkung der Farbkorrektur bei der ersten Farbe am größten ist. Weiter wird eine Unstetigkeit der Wirkung an den inneren Rändern vermieden, die zu nachteilig empfundenen Farbkanten, zu erhöhtem Rauschen oder Blinken führen kann.

In diesem Zusammenhang sei angemerkt, dass als "äußere Ränder" eines "Farbbereiches" die Ränder des Farbbereiches bezeichnet werden, die aufgrund der Beschränktheit der Wertebereiche der Farbanteile des Farbvektors nicht überschritten werden können. Werden beispielsweise die Farbanteile jeweils durch eine digitale Zahl mit 8 Bit dargestellt, deren Wertebereich somit von 0 bis 255 reicht, so kann die Grenze die durch einen Vergleich eines ersten Farbanteils mit 255 gebildet wird, nicht überschritten werden. Als "innere Ränder" eines "Farbbereichs" werden die Ränder eines Farbbereiches bezeichnet, die keine äußeren Ränder sind.

Weiterhin hat der Erfinder erkannt, dass, indem Farbbereiche durch Vergleiche von Primärfarbanteilen definiert werden, die oben als bevorzugt genannte Stetigkeit und das besonders bevorzugte Erreichen einer Wirkung von Null an den inneren Rändern der Farbbereiche einfach durch Bildung eines gewichteten Mittelwerts zwischen zwei größten oder zwei kleinsten Farbanteilen erreicht werden kann. Die gewünschte Wirkung kann mit dem Gewicht der Mittelwertbildung verknüpft werden. Diese Lösung lässt sich auf vorteilhaft einfache Weise realisieren und implementieren, insbesondere in programmierbare Logikbausteine.

Weiterhin hat der Erfinder erkannt, dass der erfindungsgemäßen Lösung eine vorteilhaft geringe Rauschverstärkung zueigen ist. Der Erfinder hat außerdem erkannt, dass sich mit dem erfindungsgemäßen Ansatz die geringste mögliche maximale Rauschverstärkung im gegebenen Farbbereich und bei der gegebenen Wirkung für die erste Farbe erreichen lässt. Dies ist darauf zurückzuführen, dass die Rauschverstärkung stark von der ersten Ableitung der Wirkung im Farbraum abhängt und die erfindungsgemäße Lösung die erste Ableitung im gegebenen Zielfarbbereich konstant hält. Das bedeutet, dass die Zu- oder Abnahme der Wirkung einer Korrektur ideal im Farbbereich verteilt wird. Durch die günstige Rauschverstärkung weist das korrigierte Bild ein besonders gutes Signal-Rausch-Verhältnis auf und wird als qualitativ besonders hochwertig empfunden.

Schließlich hat der Erfinder erkannt dass die obengenannten Gewichtung sich auf besonders einfache Weise durch Multiplikation einer aus einem Parameter berechneten Größe mit der Differenz eines ersten und zweiten Primärfarbanteils ausdrücken lässt, wenn diese zu Anteilen des ursprünglichen Farbvektors hinzu addiert oder von diesem subtrahiert werden. Dies ermöglicht eine besonders einfache Implementierung.

Die exakte Ausgestaltung der Lösungsbeispiele wurde dergestalt vorgenommen, dass Gleichungen mit den obengenannten Eigenschaften entworfen wurden, die geeignet sind, die Primärfarbanteile eines zu korrigierenden Farbvektors x unter Erhalt eines korrigierten Farbvektors y so zu verändern, dass sich bei Übertragung von x und y in den HSV-Farbraum vorwiegend der Farbton (H), die Farbsättigung (S) und die Helligkeit (V) entsprechend einer gewünschten, mit einem Parameter verbundenen, Farbkorrektur in Form einer Wirkung ändern und dass dann diese Wirkung am Ort der ersten Farbe im Farbraum am größten ist, zu den inneren Rändern hin stetig abnimmt und an den inneren Rändern Null erreicht.

### Kurze Beschreibung der Zeichnungen

Weitere vorteilhafte Ausgestaltungen der Erfindung, sowie ein Ausführungsbeispiel hierzu, werden nachstehend in Verbindung mit der beigefügten Zeichnungsfigur näher erläutert. Die innerhalb der Beschreibung des Ausführungsbeispiels verwendeten Begriffe "links", "rechts", "oben", "unten" beziehen sich auf die Zeichnungsfigur in einer Ausrichtung mit normal lesbaren Figurenbezeichnung und Bezugszeichen.

Fig. 1     stellt die Primärfarbkomponenten r, g und b von Farbvektoren <r, g, b>, die jeweils einen im HSV-Raum zugeordneten Sättigungs-Wert von 50% und einen Helligkeits-Wert von 50% besitzen, über einem von 0° bis 360° durchlaufenden Farbton-Wert dar und die korrigierte Primärfarbkomponenten r', g' und b' von korrigierten Farbvektoren <r', g', b'>, welche durch eine Farbkorrektur gemäß dem Stand der Technik aus den Farbvektoren <r, g, b> ermittelt wurden.

Fig. 2     zeigt ein bekanntes Setup, in dem eine Kamera ein Bild einer Bildszene aufnimmt, ggf. intern verarbeitet, und ausgibt;

Fig. 3     ist eine schematische Darstellung des RGB-Farbraumes als Würfel, wobei den Ecken die Farben Schwarz (K), Rot (R), Gelb (Y), Grün (G), Cyan (C), Blau (B), Magenta (M) und Weiß (W) zugeordnet sind;

Fig. 4     ist eine schematische Darstellung des RGB-Farbraums als Würfel bei Aufsicht auf die Verbindungslinie vom Weiß-Punkt zum Schwarz-Punkt;

Fig. 5 ist eine beispielhafte Darstellung der Werte für die Primärfarbanteile r, g und b über dem Farbton (H) von 0° bis 360° von Farbvektoren mit jeweils konstantem Wert für die Sättigung (S) von 100% und die Helligkeit (V) von 50%;

Fig. 6 veranschaulicht einen ersten Aspekt der Erfindung, wobei die Korrektur der Farbsättigung für Farbvektoren des der Farbe Rot als erste Farbe zugeordneten Farbbereiches dargestellt ist;

Fig. 7 ist eine beispielhafte Darstellung der Werte für die Primärfarbanteile r, g und b über dem Farbton (H) von 0° bis 360° von Farbvektoren mit jeweils konstantem Wert für die Sättigung (S) von 50% und die Helligkeit (V) von 50% wobei auf die Komponenten r, g und b eine Farbsättigungskorrektur gemäß dem ersten Aspekt der Erfindung mit dSR=2 angewandt wurde;

Fig. 8 ist eine beispielhafte Darstellung der Werte für die Primärfarbanteile r, g und b über dem Farbton (H) von 0° bis 360° von Farbvektoren mit jeweils konstantem Wert für die Sättigung (S) von 50% und die Helligkeit (V) von 50%, wobei auf die Komponenten r, g und b eine Farbsättigungskorrektur gemäß des ersten Aspekts der Erfindung mit dSY=2 angewandt wurde;

Fig. 9 ist eine beispielhafte Darstellung der Werte für die Primärfarbanteile r, g und b über dem Farbton (H) von 0° bis 360° von Farbvektoren mit jeweils konstantem Wert für die Sättigung S von 50% und die Helligkeit V von 50%, wobei auf die Komponenten r, g und b die Farbtonkorrektur gemäß dem zweiten Aspekt der Erfindung mit dHR=1 angewandt wurde;

Fig. 10 ist eine beispielhafte Darstellung der Werte für die Primärfarbanteile r, g und b über dem Farbton (H) von 0° bis 360° von Farbvektoren mit jeweils konstantem Wert für die Sättigung S von 50% und die Helligkeit V von 50%, wobei auf die Komponenten r, g und b die Farbtonkorrektur gemäß dem zweiten Aspekt der Erfindung mit dHY=1 angewandt wurde,

Fig.. 11 ist eine beispielhafte Darstellung der Werte für die Primärfarbanteile r, g und b über dem Farbton (H) von 0° bis 360° von Farbvektoren mit jeweils konstantem Wert für die Sättigung S von 50% und die Helligkeit V von 50%, wobei auf die Komponenten r, g und b der Farbvektoren die Farbtonhelligkeitskorrektur gemäß dem dritten Aspekt der Erfindung mit dVR=0.5 angewandt wurde; und

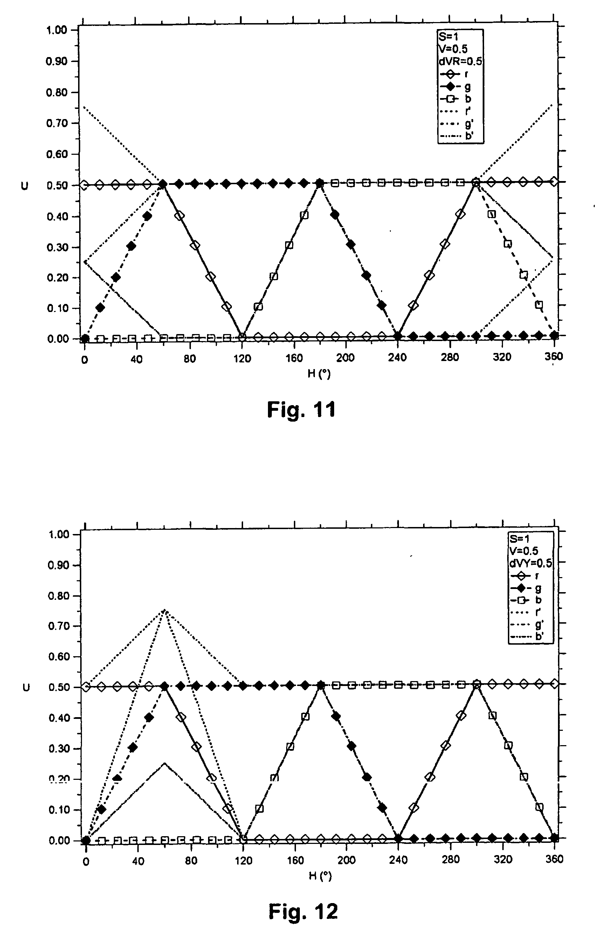

Fig. 12 ist eine beispielhafte Darstellung der Werte für die Primärfarbanteile r, g und b über dem Farbton (H) von 0° bis 360° von Farbvektoren mit jeweils konstantem Wert für die Sättigung S von 50% und die Helligkeit V von 50%, wobei auf die Komponenten r, g und b die Farbtonkorrektur gemäß dem dritten Aspekt der Erfindung mit dVY=0.5 angewandt wurde.

## Detailierte Beschreibung von Ausführungsbeispielen

Fig. 2 zeigt eine erfindungsgemäße Farbkamera 23 als ist Teil eines Kamerasystems 24, mit dem beispielsweise ein Farbbild der Bildszene 20 aufgenommen werden kann. Eine Bildaufnahmesektion besteht im Wesentlichen aus einer Optik 21 und mindestens einem Bildsensor 22. Es sei angemerkt, dass ein Objektiv oder ein Teil der Optik bereits in die Farbkamera 23 integriert sein kann.

Die Optik 21 bildet die Bildszene 20 auf den mindestens einen Bildsensor 22 ab. Der Bildsensor 22 setzt das über die Optik 21 auf ihn projizierte Bild in ein digitales oder analoges Bildsignal um. Ursprünglich analoge Bildsignale können durch Analog-DigitalWandlung in ein digitales Bildsignal umgewandelt werden. Das Bildsignal besteht aus einer Vielzahl, typischerweise einer zeitlichen Abfolge, von digitalen Signalen, wobei jedes digitale Signal einem Pixel oder einer Gruppe weniger, einander benachbarter Pixel zugeordnet ist (vgl. z.B. A. Theuwissen, "Solid State Imaging with Charge-Coupled Devices", Kluwer Academic Publishers, Dordrecht 1995).

Die Farbkamera 23 der Fig. 2 enthält ein erfindungsgemäßes Bildbearbeitungsmittel 27, wie zum Beispiel einen entsprechend eingerichteten, d.h. programmierten Mikroprozessor und/oder einen digitalen Signalprozessor (DSP) oder der gleichen; ggf. sind Speichermittel für ein Computerprogramm mit vom Bildbearbeitungsmittel 27 ausführbaren Programmbefehlen vorgesehen, mittels derer beispielsweise die wesentlichen Funktionen der Farbkamera 23 gesteuert werden.

Das Bildbearbeitungsmittel 27 bietet insbesondere eine Möglichkeit, Maßnahmen zur Bearbeitung von Eigenschaften eines Bildes, z.B. zur Farbkorrektur, in eine Farbkamera zu implementieren. Beispielsweise kann ein vorhandenes Computerprogramm um entsprechende zusätzliche Programmteile bzw. Routinen ergänzt werden, die dann die Datenverarbeitungseinrichtung so steuern, dass eine gewünschte Beeinflussung der Bilddaten eines aufgenommenen Bildes ausführt wird. D.h., mit dem Bildbearbeitungsmittel 27 kann das Bildsignal bzw. die Bilddaten rechnerisch behandelt werden.

Alternativ zur vorstehend beschriebenen Implementierung mittels eines, ggf. bereits vorhandenen, programmierbaren Mikroprozessors oder DSPs, ist es auch möglich, solche Bildverarbeitungsmaßnahmen direkt mittels einer entsprechenden digitalen elektronischen Schaltung, beispielsweise mittels einer fest verdrahteten Logik bzw. konfigurierbaren Logik zu implementieren. Eine solche elektronische Schaltung kann besonders flexibel mittels eines integrierten Schaltkreises der Digitaltechnik implementiert werden, in den eine gewünschte logische Schaltung programmiert werden kann. D.h., zur Integration einer erfindungsgemäßen Bildkorrektur kann eine bestehende Farbkamera an geeigneter Stelle mit mindestens einem programmierbaren Logikbaustein, z. B. einem PLD (engl. Programmable Logic Device), oder einem FPGA (engl. Field Programmable Gated Array), ausgestattet oder ergänzt werden.

Eine solche elektronische Schaltung kann beispielsweise in die Farbkamera 23 derart integriert werden, dass der Rohbilddatenstrom, der vom Bildsensor 22 ausgegeben wird, unmittelbar einem erfindungsgemäßen Korrektur unterworfen wird. Alternativ kann eine solche Schaltung auch an anderer geeigneter Stelle integriert werden. Möglich ist beispielsweise eine separate Anordnung nach oder vor dem Bildbearbeitungsmittel 27. Eine weitere Möglichkeit besteht in der Integration in das Bildbearbeitungsmittel 27, wenn dies bereits mittels programmierbarer Logik, wie z.B. einem DSP oder FPGA, realisiert ist.

Somit ist alternativ zu einem Computerprogramm die Implementierung eines der hier diskutierten Bildkorrekturen mittels einer spezifischen Konfiguration, beispielsweise mit mindestens einem Konfigurationsprogramm oder mindestens einer Konfigurationsdatei, eines oder mehrerer flexibel programmierbaren Logikbausteins möglich. Anders als bei der Programmierung von Computern oder Steuerungen bezieht sich dann der Begriff Programm nur in zweiter Linie auf die Vorgabe zeitlicher Abläufe im Baustein, sondern vor allem auf die Definition von dessen Funktionsstruktur. Durch die Programmierung von Strukturvorschriften wird zunächst die grundlegende Funktionsweise einzelner universeller Blöcke im Logikbaustein und deren Verschaltung untereinander festgelegt, d.h. konfiguriert.

Es sei noch angemerkt, dass die im Folgenden diskutierten Bildkorrekturmaßnahmen zwar bevorzugt in einem Bildbearbeitungsmittel der Farbkamera erfolgen, aber alternativ auch vorgesehen werden kann, die Korrektur mittels eines separaten nachgeordneten Datenverarbeitungsgeräts, wie z.B. einen Computer, durchzuführen. D.h., eine Bildkorrektur kann einerseits zur Aufnahmezeit bzw. bei der Aufbereitung des Bildes in der Farbkamera, andererseits auch zeitversetzt zu einem späteren Zeitpunkt außerhalb der Farbkamera erfolgen.

Das Bildsignal kann in Echtzeit mittels eines Übertragungsmittels, z.B. über ein Kabel 25 oder alternativ eine Funkverbindung, ausgegeben werden. Dies ist z.B. bei Überwachungskameras gebräuchlich. Bei der Implementierung der Übertragung des Bildsignals kann auf bekannte Übertragungsstandards zurückgegriffen werden, wie beispielsweise die Technologien und Übertragungsprotokolle Camera Link (Standard AIA Camera Link), Ethernet (Standard IEEE 802.3), Firewire (Standard IEEE 1394), Universal Serial Bus (USB) mit Protokollen oder Datenformaten wie beispielsweise GigEVision (Standard AIA GigEVision), DCAM (Standard 1394 Trade Association) oder proprietäre Protokolle, MJPEG, MPEG, beispielsweise MPEG-4, H.264. Alternativ können auch reine Rohdatenformate verwendet werden.

Auch kann das Bildsignal in Form digitaler Bilddaten in der Farbkamera 23 gespeichert und zeitversetzt, d.h. zu einem späteren Zeitpunkt mittels eines Übertragungsmittels, z.B. durch das Kabel 25 in Fig. 2, ausgegeben werden, wie dies beispielsweise bei digitalen Fotoapparaten gebräuchlich ist.

Die Ausgabe der Bilddaten aus der Kamera kann auch dadurch erfolgen, dass sie auf ein lösbar mit der Kamera verbundenem Speichermedium gespeichert werden, welches durch einen Benutzer aus der Kamera entnommen werden kann, um dann die Bilddaten außerhalb der Kamera weiterzuverwenden.

Weiterhin besitzt die erfindungsgemäße Farbkamera 23, insbesondere das Bildverarbeitungsmittel 27 wenigstens eine Schnittstelle, wobei über die Schnittstelle Parameter, insbesondere solche mit einer erfindungsgemäßen Bildkorrektur, d.h. die Korrektur bestimmter Farbeigenschaften eines bestimmten Farbbereiches, in Zusammenhang stehende Parameter, im Bildverarbeitungsmittel auf vorgegebene Werte gesetzt bzw. eingestellt und bevorzugt auch verändert werden können.

An der Schnittstelle sind bevorzugt Bedienelemente vorgesehen, mit deren Hilfe ein Benutzer der Kamera die Parameter in der Kamera beeinflussen kann. Unter einem Bedienelement sei hier im Wesentlichen ein von einem Benutzer bedienbares Eingabemittel bzw. Einstellmittel für einen Parameter verstanden. Beispielsweise kann die Schnittstelle Schieberegler, Drehknöpfe, Sensoren, Taster zum Anheben oder Absenken eines Parameterwertes, verschiedene Schalter und/oder auch entsprechende Eingabefelder zur Eingabe von Parameterwerten mittels einer Tastatur aufweisen.

Bevorzugt ist vorgesehen, die Farbkamera 23 mittels Übertragung, z.B. über das Kabel 25 oder eine Funkverbindung, zu parametrieren. Dabei können Übertragungsprotokolle und/oder Datenformate eingesetzt werden, die es ermöglichen, auf die Kamera, d.h. das Bildverarbeitungsmittel 27 in der Kamera, zuzugreifen und Parameter in der Kamera mittels der genannten Bedienelemente, z.B. Register oder Kommandos, zu setzen. Ein derartiger Zugriff kann unter Verwendung von Datenverarbeitungsgeräten, wie z.B. einem Computer, erfolgen, auf dem die Schnittstelle zur Kamera mittels Software, die ihrerseits die gewünschten Bedienelemente, z.B. in einer graphischen Benutzeroberflächen, emuliert, implementiert ist. Besonders bevorzugt wird damit ein Bedienelement in Software ausgeführt. In der Kamera kann eine virtuelle Beschreibung des Parameters gespeichert werden und das Programm auf dem Computer generiert auf Grundlage dieser Parameterbeschreibung ein entsprechendes Bedienelement.

Mit anderen Worten, ein Bedienelement an der Schnittstelle, die im Wesentlichen die Benutzer-Kamera-Schnittstelle darstellt, kann damit je nach Bedarf in Hardware oder in Software ausgeführt sein. Hier sei angemerkt, dass Protokolle bekannt sind, z.B. gemäß dem Industriestandard GenICam (European Machine Vision Association GenICam), welche Beschreibungen zum Zugriff auf Bedienelemente enthalten. Auch das sei hier unter einem Bedienelement verstanden.

Der Bildsensor 22 der Farbkamera 23 ist so eingerichtet, dass damit verschiedene Farben unterschieden werden können. Dazu weist der Bildsensor 22 eine regelmäßige Anordnung lichtempfindlicher Bildelemente, welche auch als Pixel bezeichnet werden, auf. Die Pixel weisen jeweils einen Farbfilter auf, der die spektrale Empfindlichkeit des Pixels dahingehend einschränken, dass der Pixel für bestimmte Farben empfindlicher ist als für andere. Die hierfür benötigten Farbfilter werden technisch häufig als farbige Beschichtung in einer regelmäßigen Anordnung, wie zum Beispiel in der US 3 971 065 gezeigt, ausgeführt. Eine solche regelmäßige Anordnung ist auch als Mosaikfilter oder unter dem Begriff Bayer-Maske bekannt. Alternativ können auch Prismen als Farbfilter zum Einsatz kommen.

In digitalen Farbkameras werden häufig drei oder vier verschiedene Sorten von Farbfiltern vorgesehen. Besonders gebräuchlich sind die Farbkombinationen Rot, Grün und Blau (RGB) oder Rot, Grün, Blau und Weiß (RGBW) oder Cyan, Magenta und Gelb (CMY) oder Cyan, Magenta, Gelb und Grün (CMYG). Ohne Beschränkung der Allgemeinheit werden hier die Farben der Farbfilter als Primärfarben des Sensors Rot (R), Grün (G) und Blau (B) bezeichnet.

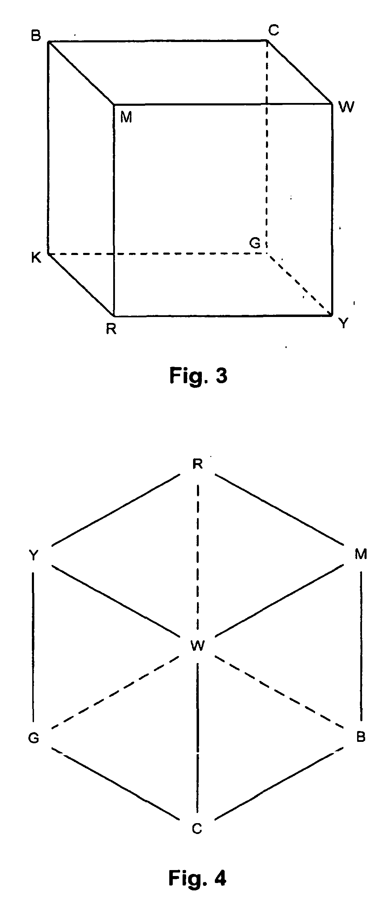

Die Fig. 3 zeigt eine schematische Darstellung des RGB-Farbraumes als Würfel. Die Ecken des RGB-Farbraumes haben die Farben Schwarz (K), Rot (R), Gelb (Y), Grün (G), Cyan (C), Blau (B), Magenta (M) und Weiß (W). Am Beispiel des RGB-Farbraumes werden im Folgenden einige für das Verständnis der Erfindung wichtige Zusammenhänge und Begriffe erklärt.

Durch additives Mischen jeweils zweier Primärfarben erhält man sogenannte Sekundärfarben, welche im RGB-Farbraum als Cyan (C), Magenta (M) und Gelb (Y) bezeichnet werden. Das additive Mischen aller drei Primärfarben R, G und B ergibt Weiß (W).

$$R + G = Y;$$

$$G + B = C;$$

$$B + R = M;$$

und

$$R + G + B = W.$$

Nachstehende Tabelle 1 enthält solche Paare von Farben, die jeweils als Komplementärfarben bezeichnet werden. Komplementärfarben ergeben in additiver Mischung eine unbunte Farbe, z.B. Weiß oder Grau. Eine erste Farbe, die gemeinsam mit einer zweiten Farbe ein Paar von Komplementärfarben bildet, wird als der zweiten Farbe entgegengesetzt bezeichnet.

**Tabelle 1** :

| Farbe | -> | entgegengesetzte Farbe |
|-------|-----|------------------------|
| R | -> | C |
| Y | -> | B |
| G | -> | M |
| C | -> | R |
| B | -> | Y |
| M | -> | G |

Nachstehende Tabelle 2 enthält nur Primärfarben als entgegengesetzte Farben. Wenn zwei Primärfarben in additiver Mischung eine einer ersten Farbe entgegengesetzte zweite Farbe ergeben, werden diese Primärfarben als der ersten Farbe entgegengesetzte Primärfarben bezeichnet.

**Tabelle 2:**

| Erste Farbe | -> | entgegengesetzte Primärfarbe(n) |
|---|---|---|
| R | -> | G, B |
| Y | -> | B |
| G | -> | B, R |
| C | -> | R |
| B | -> | R, G |
| M | -> | G |

Fig. 4 zeigt eine schematische Darstellung des RGB-Farbraums als Würfel bei Draufsicht auf den Weißpunkt, wobei die Verbindungslinie vom Weiß (W)- zum Schwarz (K)-Punkt, die auch als Unbuntheitslinie bezeichnet wird, und der K-Punkt in der Abbildung vom W-Punkt verdeckt werden. In der Ansicht der Fig. 4 erscheinen Primärfarben und Sekundärfarben als Eckpunkte eines Sechsecks. Entgegengesetzte Farben liegen sich in diesem Sechseck gegenüber. Ist eine entgegengesetzte Farbe eine Sekundärfarbe, so liegend die entgegengesetzten Primärfarben jeweils neben der entgegengesetzten Sekundärfarbe.

Es sei angemerkt, dass Sensoren mit anderen Primärfarben, z.B. C, M und Y, andere Sekundärfarben aufweisen, z.B. R, G und B. Der Fachmann ist in der Lage, die nachfolgend diskutierte Lehre auch auf solche Fälle zu übertragen, indem in den jeweiligen Gleichungen die Symbole R, G und B gegen die Symbole der entsprechenden Primärfarben, im gerade genannten Beispiel C, M und Y ausgetauscht werden und auf gleiche Weise die Symbole C, M und Y gegen die Symbole der entsprechenden Sekundärfarben, im genannten Beispiel R, G und B. Somit ist der Fachmann in der Lage, die erforderlichen mathematischen Zusammenhänge zwischen den anderen Primärfarben und den anderen Sekundärfarben zu berücksichtigen.

Um ein komplettes Farbbild zu erhalten, d.h. in dem Sinne, dass für jeden einzelnen Pixel alle Primärfarbkomponenten vorliegen, kann bzw. können für jeden Pixel die fehlende(n) Farbinformation(en) mittels eines Interpolationsverfahrens, wie z.B. in der US 5 889 554, einer sogenannten Color Filter Array (CFA) Interpolation, berechnet werden. Als Ergebnis liegt dann für jede Bildposition ein Farbvektor in einem Farbraum vor, welcher hier als RGB-Farbvektor <r, g, b> bezeichnet wird und sich aus den Primärfarbanteilen r, g, und b zusammensetzt. Damit sind die Farbbilddaten Bilddaten mit je einem Farbvektor für jeden Pixel.

Dem RGB-Farbvektor sind ein Farbton H, eine Farbsättigung S und ein Helligkeitswert V zugeordnet. Es sind mehrere Farbräume bekannt, die verschiedene Berechnungsvorschriften für Farbtöne, Farbsättigungen und Helligkeiten angeben, wobei sich der Farbton, die Farbsättigung und die Farbhelligkeit jeweils aus einem mathematischen Verhältnis der Primärfarbanteile zueinander ergeben. Das mathematische Verhältnis kann linearer, stückweise linearer oder auch nichtlinearer Natur sein. Als Beispiel sei der HSV-Farbraum benannt, für den Umrechnungsformeln von R, G und B in H, S und V und in umgekehrter Richtung aus der Literatur bekannt sind (vgl. z.B. A. Koschan, M. Abidi in "Digital Color Image Processing", John Wiley & Sons, Hoboken 2008).

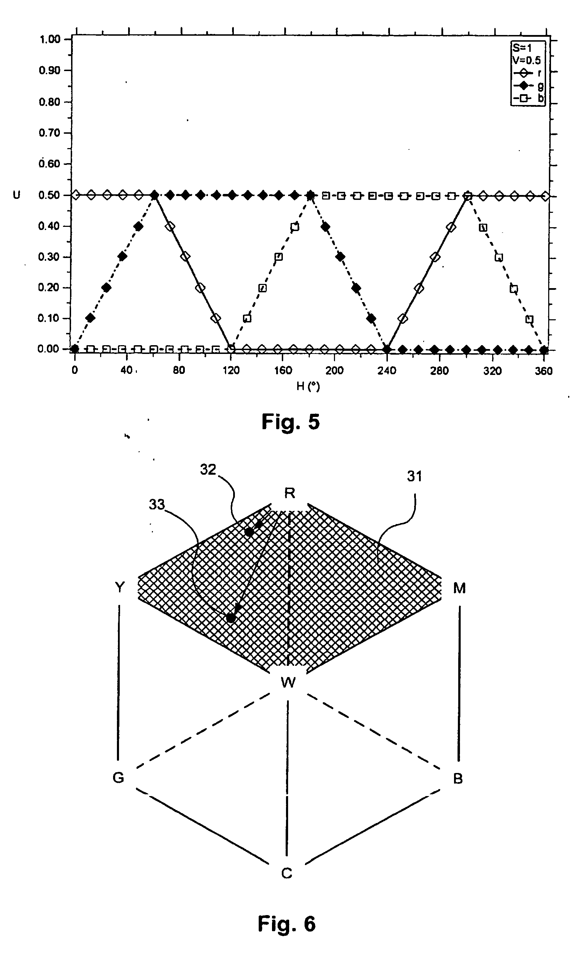

Fig. 5 ist eine beispielhafte Darstellung der Werte für die Primärfarbanteile r, g und b über dem Farbton H von 0° bis 360° von Farbvektoren mit jeweils konstantem Wert für die Sättigung S von 100% und die Helligkeit V von 50%.

Die spektrale Empfindlichkeit eines Bildsensors weicht im Allgemeinen von einer idealen spektralen Empfindlichkeit ab, z.B. von der des menschlichen Auges oder von der eines technisches Wiedergabegerätes, z.B. eines Monitors oder eines Druckers. Hierdurch ergeben sich Farbfehler in dem Sinne, dass ein RGB-Farbvektor nicht die gleiche Farbe der zugeordneten, räumlichen Stelle im Bild wiedergibt, die ein menschlicher Betrachter oder ein ideales technisches Messgerät erkennen würde. Vom Betrachter werden dabei Fehler des Farbtons sowie der Farbsättigung als besonders störend empfunden.

Eine erfindungsgemäße Farbkamera ermöglicht es nun, Farbfehler für Farbbereiche zu korrigieren, ohne dass nachteiligen Bildartefakte oder blinkende Farbkanten bei bewegten Bildern auftreten. Insbesondere bietet die erfindungsgemäße Farbkamera zu diesem Zweck eine in Hardware oder Software implementierte Schnittstelle mit Bedienelementen, mittels der ein Benutzer leicht, d.h. ohne besonderes Vorwissen, die Korrekturmöglichkeiten anwenden bzw. bedienen kann.

Hierzu ist als ein erster Aspekt der Erfindung vorgesehen, dass an der Schnittstelle der Farbkamera wenigstens ein Bedienelement zur Eingabe und oder Veränderung eines Parameters im Bildverarbeitungsmittel zur Korrektur der Farbsättigung eines einer ersten Farbe zugeordneten Farbbereiches vorgesehen ist. Damit kann über dieses Bedienelement erfindungsgemäß ein Farbvektor, der dem Farbbereich angehört, korrigiert werden.

Insbesondere ist vorgesehen, dass als Folge einer Einstellung über die Schnittstelle, der eine Erhöhung der Farbsättigung zugeordnet ist, bei einem zu korrigierenden Farbvektor, d.h. einem Farbvektor, der dem Farbbereich angehört, die Farbwerte der der ersten Farbe entgegengesetzten Primärfarbe abgesenkt werden. In Folge einer Einstellung über die Schnittstelle, der eine Verringerung der Farbsättigung zugeordnet ist, werden bei einem zu korrigierenden Farbvektoren die Farbwerte der der ersten Farbe entgegengesetzten Primärfarbe oder ggf. entgegengesetzten Primärfarben (vgl. Tabelle 2, oben) angehoben.

Bevorzugt ist die Wirkung ist in beiden Fällen, d.h. im Fall der Absenkung oder Anhebung, für solche Farben des zu korrigierenden Farbvektors, die einen geringen Farbabstand zur ersten Farbe aufweisen, größer als für solche Farben des zu korrigierenden Farbvektors, die einen größeren Farbabstand zur ersten Farbe aufweisen. Grundsätzlich ist weiter vorgesehen, dass an Farbvektoren, die nicht dem Farbbereich angehören, keine Änderung vorgenommen wird.

Hinsichtlich der in Hardware oder Software implementierten Bedienelemente sei angemerkt, dass vorzugsweise sechs erste Bedienelemente zur Korrektur der Farbsättigung, d.h. Farbsättigungsbedienelemente, an der Schnittstelle vorgesehen sind, die jeweils den Farben Rot (R), Gelb (Y), Grün (G), Cyan (C), Blau (B) und Magenta (M) als erste Farben zugeordnet sind. Bei einer besonders bevorzugten Alternative sind zwei erste Bedienelemente vorgesehen, von denen ein erstes erstes Bedienelement eine Auswahl zwischen den sechs möglichen ersten Farben (R, Y, G, C, B und M) ermöglicht und von denen ein zweites erstes Bedienelement für die eigentliche Eingaben bzw. Veränderung des Parameters zur Korrektur der Farbsättigung der mit dem ersten ersten Bedienelement ausgewählten Farbe eingerichtet ist.

Fig. 6 veranschaulicht den ersten Aspekt der Erfindung, wobei die Korrektur der Farbsättigung für Farbvektoren des der Farbe Rot als erste Farbe zugeordneten Farbbereiches dargestellt ist. D.h., an der Schnittstelle zum in der Farbkamera vorgesehenen Bildverarbeitungsmittel ist wenigstens ein erstes Bedienelement zur Einstellung eines Parameters dSR, um die Farbsättigung der Farbe Rot (R) als erste Farbe zu korrigieren. Der Farbe Rot ist ein Farbbereich 31 zugeordnet, der sich von Magenta (M) über Rot (R) bis Gelb (Y) erstreckt.

Erfindungsgemäß wird die Farbsättigung dadurch erhöht, dass das Bildverarbeitungsmittel die Werte der Primärfarbanteile g und b, der der Primärfarbe Rot (R) entgegengesetzten Primärfarben Grün (G) und Blau (B) abgesenkt. Wie bereits erwähnt, ist es bevorzugt, dass die Wirkung der Korrektur für einen zu korrigierenden ersten Beispielfarbvektor 32, welcher einen geringen Farbabstand zur ersten Farbe Rot aufweist, größer als für einen zu korrigierenden zweiten Beispielfarbvektor 33, der einen größeren Farbabstand zur ersten Farbe Rot aufweist.

Damit sich eine Absenkung oder Anhebung für solche Farben eines zu korrigierenden Farbvektors, die einen geringen Farbabstand zur ersten Farbe aufweisen, stärker auswirkt als für solche Farben eines zu korrigierenden Farbvektors, die einen größeren Farbabstand zu der ersten Farbe aufweisen, ist das Bildverarbeitungsmittel so konfiguriert, dass die Wirkung, welche das Bildverarbeitungsmittel in der Kamera mit dem der ersten Farbe zugeordneten Bedienelement zur Korrektur der Farbsättigung verknüpft, auf mathematisch stetige Weise mit zunehmender farblicher Distanz des zu korrigierenden Farbvektors von der ersten Farbe abnimmt, oder proportional zu einer stetig monotonen Funktion der Differenz zweier Primärfarbanteile des zu korrigierenden Farbvektors ist, oder proportional zur Differenz zweier Primärfarbanteile des zu korrigierenden Farbvektors ist.

Damit die Wirkung am inneren Rand des Farbbereiches nicht auf unstetige Weise endet, ist das Bildverarbeitungsmittel so konfiguriert, dass die Wirkung auf stetig monotone Weise an den inneren Rändern des Farbbereiches den Wert Null annimmt.

Wie erläutert, bietet eine erfindungsgemäße Kamera, in besonders anwenderfreundlicher Weise, ein Bedienelement zur Korrektur der Farbsättigung einer ersten Primärfarbe F1, der ein entsprechender Farbbereich zugeordnet ist.

Ein zu korrigierender Farbvektor setzt sich aus den Primärfarbanteilen f1, f2 und f3 zusammen, wobei diese Primärfarbanteile im bzw. vom Bildverarbeitungsmittel den einzelnen Primärfarben so zugeordnet werden, dass die Ungleichung f1 >= f2 >= f3 erfüllt ist. Mit anderen Worten sind die Primärfarbanteile f1, f2 und f3 die Komponenten des Farbvektors in ungeordneter Reihenfolge. Die Zuordnung von f1, f2 und f3 zu den Komponenten eines Farbvektors ergibt sich erst durch eine Sortierung.

Das Bildverarbeitungsmittel der Kamera ist nun eingerichtet, bei einer Korrektur der Farbsättigung, einen korrigierten zweiten Primärfarbanteil f2' des korrigierten Farbvektors, der sich aus Primärfarbanteilen f1', f2' und f3' zusammensetzt, mit einer von der Änderung des Parameterwerts mittels des Bedienelements abhängigen Gewichtung zwischen f2 und f1 zu berechnen. Ebenso wird der korrigierte dritte Primärfarbanteil f3' des korrigierten Farbvektors mit einer von der Änderung des Parameterwert abhängigen Gewichtung zwischen f3 und f1 berechnet.

Eine Gewichtung wird hierbei definiert als ein gewichtetes arithmetisches Mittel der Form

$$c = (1\text{-}alpha)^{*}a + alpha^{*}b,$$

wobei a und b jeweils eine Eingangsgröße und alpha ein Gewichtungsparameter ist, und der Wertebereich des Gewichtungsparameters über den Bereich von 0 bis 1 hinausreicht. Der Wertebereich des Gewichtungsparameters geht insbesondere dann über 1 hinaus, wenn als erwünschter Wirkung eine Erhöhung der Farbsättigung erreicht werden soll. Eine solche Gewichtung kann auch auf mathematisch äquivalente Weise berechnet werden.

Je nach der Definition des Wertebereiches eines dem Bedienelement zugeordneten Parameters dS kann der Gewichtungsparameter alpha aus dS durch einen geeigneten mathematischen Zusammenhang, z.B. durch Anwendung einer linearen Gleichung, ermittelt werden.

Als Beispiel sei ein Bedienelement der Kamera zur Korrektur der Farbsättigung der Farbe Rot (R) betrachtet. Der Parameter für die Farbsättigung der Farbe Rot kann z.B. in einem Register der Kamera oder im Bildverarbeitungsmittel der Kamera abgelegt sein, auf welches durch einen Computer über ein Kabel mit einem Datenprotokoll zugegriffen werden kann. Somit kann eine Änderung dSR des aktuellen Parameters für die Farbsättigung der Farbe Rot SR für die Korrektur der Farbsättigung der Farbe Rot herangezogen werden.

Als ein erstes Beispiel sei hier angenommen, dass dSR einen Wert von 1.5 bei einem Wertebereich von 0 bis 2 und einem Neutralwert von 1 aufweist. Der Wert von 1.5 entspricht damit einer Erhöhung der Farbsättigung um 50%. Der Farbe Rot als erste Farbe ist gemäß der Erfindung somit als Farbbereich Rot zugeordnet, der die Farben von Magenta bis Gelb umfasst.

Nun wird beispielshaft angenommen, dass ein zu korrigierender Farbvektor <r, g, b> = <255, 128, 64> mit der Farbe Orange sich aus den Primärfarbanteile r = 255, g = 128 und b = 64 zusammensetzt.

Farbvektoren der Farbe Orange besitzen die Eigenschaft, dass r > g > b ist. Somit trifft das Bildverarbeitungsmittel die Zuordnungen f1 = r = 255, f2 = g = 128, f3 = b = 64, damit ebenfalls die Ungleichung f1 >= f2 >= f3 erfüllt ist.

Die Zugehörigkeit eines Farbvektors zum Farbbereich, im vorliegenden Beispiel dem der Rot zugeordneten Farbbereich, kann durch Bestimmung von H ermittelt werden. Da der Farbvektor <255, 128, 64> eine orange Farbe repräsentiert, besitzt er einen Farbwert, d.h. H-Wert, von ca. 30°. Der Farbbereich Rot erstreckt sich von Magenta mit einem H-Wert von 300° bis Gelb mit einem H-Wert von 60°, wobei die Farbe Rot mit einem H-Wert von 0° überstrichen wird. Der Farbvektor <255, 128, 64> mit dem Farbwert von ca. 30° fällt somit in den Farbbereich Rot.

Daher wird das Bildverarbeitungsmittel die mit dem Bedienelement zur Korrektur der Farbsättigung der Farbe Rot verbundene Operation auf den Farbvektor <255, 128, 64> anwenden. Als Ergebnis wird ein Farbvektor <r', g', b'> erhalten, der sich aus den Primärfarbanteilen r', g' und b' zusammensetzt. Als Korrekturoperation wendet das Bildverarbeitungsmittel beispielsweise folgende Gleichungen an:

$$r' = r;$$

$$g' = g + (1 - dSR)*(r-g);$$

und

$$b' = b + (1 - dSR)*(r-g).$$

Die Gleichungen für die Primärfarbanteile g' und b' beinhalten jeweils Gewichtungen und ihre Berechnungsformel entspricht auf mathematisch äquivalente Weise der oben genannten allgemeinen Formel für eine Gewichtung.

Mit den im Beispiel genannten Werten ergibt sich der korrigierte Farbvektor abgerundet als <255, 64, 0>. Dies entspricht einem stärker gesättigten Orange verglichen mit dem ursprünglichen Farbvektor <255, 128, 64>.

Durch die jeweilige Multiplikation mit einem Vielfachen des Terms (r-g) wird auf einfache Weise erreicht, dass die jeweilige Wirkung (1 - dSR)*(r-g) von der Farbe Rot, bei der die Differenz (r-g) am größten ausfällt, zur inneren Grenzfläche hin, die durch eine Verbindung der Farbe Gelb mit der Unbuntheitslinie aufgespannt wird, auf stetig monotone Weise abnimmt und an dieser inneren Grenzfläche Null wird, denn auf dieser inneren Grenzfläche gilt überall r = g und somit führt eine Multiplikation mit (r-g) dort zur Wirkung Null.

Die Zuordnung zum Farbbereich H = 300° bis H = 60° lässt sich dabei auf einfache und praktikable Weise beispielsweise prüfen mit der Bedingung r >= g und r >= b.

Für ein zweites Beispiel sei als ein zweiter, zu korrigierender Farbvektor <255, 64, 128> angenommen, der sich aus den Primärfarbanteilen r = 255, g = 64 und b = 128 zusammensetzt und ein nicht voll gesättigtes rötliches Magenta repräsentiert.

Der zweite Farbvektor besitzt ebenfalls die Eigenschaft r > b > g, sodass ebenfalls die Zuordnungen f1 = r = 255, f2 = b = 128, f3 = g = 64 zu treffen sind und die Ungleichung f1 >= f2 >= f3 erfüllt wird. Damit erfüllt auch der zweite Farbvektor die Bedingung für die Zuordnung zum Farbbereich Rot.

Nun kann das Bildverarbeitungsmittel die mit dem Bedienelement zur Korrektur der Farbsättigung der Farbe Rot verbundene Operation anwenden:

$$r' = r$$

$$g' = g + (1 - dSR)*(r-b)$$

$$b' = b + (1 - dSR)*(r-b)$$

Als Ergebnis der im Bildverarbeitungsmittel der Kamera durchgeführten Farbsättigungskorrektur ergibt sich als zweiter, korrigierter Farbvektor <255, 0, 64>, der sich aus den korrigierten Primärfarbanteilen r = 255, g = 0 und b = 64 zusammensetzt. Dieser zweite Farbvektor entspricht einem stark gesättigten rötlichen Magenta.

Als ein drittes Beispiel sei ein dritter Farbvektor <32, 0, 255> mit den Primärfarbanteilen r = 32, g = 0 und b = 255 angenommen, der die Farbe Kornblumenblau repräsentiert. Der dritte Farbvektor <32, 0, 255> erfüllt jedoch die Bedingung r >= g und r >= b nicht und gehört folglich nicht dem Farbbereich Rot an.

Daher lässt das Bildverarbeitungsmittel den dritten Farbvektor unverändert, d.h. die in den beiden vorhergehenden Beispielen beschriebene Operation zur Farbsättigungskorrektur des Farbbereiches Rot wird auf den dritten Farbvektor nicht angewendet.

Hier sei angemerkt, dass ein Fachmann durch die vorstehenden Beispiele für eine erfindungsgemäße Farbsättigungskorrektur in die der Lage versetzt sein sollte, eine Korrektur der Farbsättigung der Farbe Grün abzuleiten, indem zyklisch jeweils Rotwerte r durch Grünwerte g, Grünwerte g durch Blauwerte b und Blauwerte b durch Rotwerte r ersetzt werden. In gleicher Weise sind dann die Zuordnungen zyklisch unter Beachtung der Gesetzmäßigkeiten des Farbraums zu ersetzen. Durch eine entsprechende zyklische Vertauschung von Werten und Zuordnungen kann der Fachmann ebenfalls eine Korrektur der Farbsättigung der Farbe Blau ableiten.

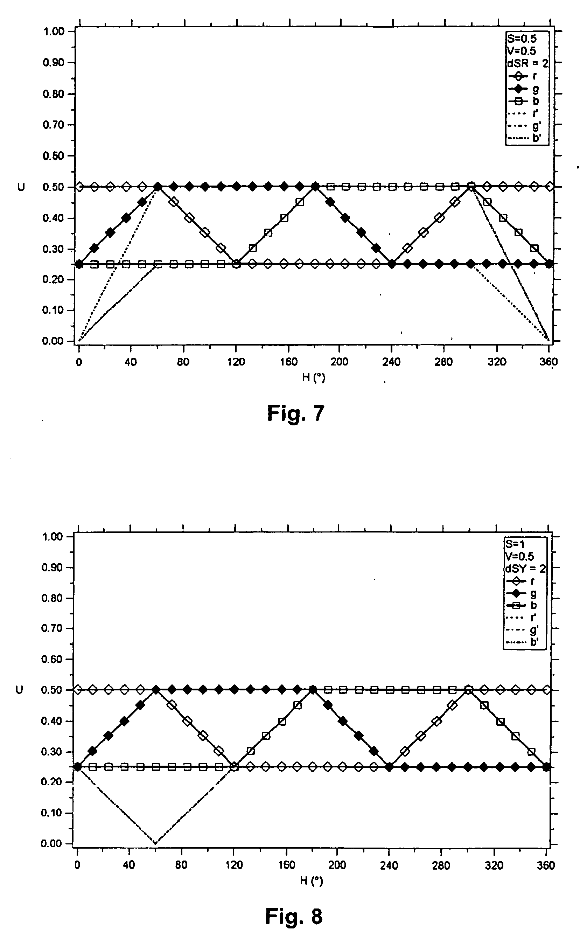

Fig. 7 ist eine beispielhafte Darstellung der Werte für die Primärfarbanteile r, g und b über dem Farbton H von 0° bis 360° von Farbvektoren mit jeweils konstantem Wert für die Sättigung S von 50% und die Helligkeit V von 50%. Auf diese Farbvektorkomponenten r, g und b wurde die Farbkorrektur gemäß der vorangegangenen Beispiele gemäß einem ersten Aspekt der Erfindung mit dSR = 2 angewandt. Als Ergebnis wurden jeweilige zugeordnete Farbvektoren <r', g', b'> erhalten. Die Farbvektorkomponenten, d.h. deren jeweilige Primärfarbanteile r', g' und b', der korrigierten Farbvektoren sind über dem jeweils den zugeordneten Komponenten r, g und b zugeordneten H-Wert dargestellt.

Da r' gleich r ist, fallen die zugehörigen Kurven für den Primärfarbanteil Rot zusammen und r' ist nicht einzeln in der Abbildung zu erkennen. Aus den Verläufen der Kurven von g' und b' wird ersichtlich, dass alle Änderungen stetig erfolgen, dass die Wirkung bei H = 0°, also bei der Farbe Rot, am größten ist und dass die Wirkung zu den inneren Rändern bei H = 300° und H = 60° hin stetig auf Null abnimmt.

Im Folgenden sei nun die in einer erfindungsgemäßen Kamera implementierte Farbkorrektur für Sekundärfarben als erste Farben erläutert. Einer Sekundärfarbe SF1 als erste Farbe kann ebenfalls ein Farbbereich zugeordnet werden, wobei dem entsprechend an der wenigstens einen Schnittstelle der Kamera auch ein entsprechendes Bedienelement zur Korrektur der Farbsättigung eines dieser Sekundärfarbe als erste Farbe zugeordneten Farbbereiches vorgesehen ist.

Die erfindungsgemäße Implementierung nutzt dabei die Erkenntnis, dass sich eine Sekundärfarbe additiv aus zwei Primärfarben F1 und F2 zusammensetzen lässt. Wie bereits erwähnt, setzt sich ein zu korrigierender Farbvektor aus Primärfarbanteilen f1, f2 und f3 zusammen. Diese Primärfarbanteile werden vom Bildverarbeitungsmittel den einzelnen Primärfarben so zugeordnet, dass die Ungleichung f1 >= f2 >= f3 erfüllt wird, wobei im Falle einer Sekundärfarbe f1 dann der ersten Primärfarbe F1 und f2 der zweiten Primärfarbe F2 zugeordnet sind.

Das Bildverarbeitungsmittel der Kamera ist so eingerichtet, bei einer Korrektur der Farbsättigung des einer Sekundärfarbe zugeordneten Farbbereichs, den dritten Primärfarbanteil f3' für einen korrigierten Farbvektor, der die Primärfarbanteile f1', f2' und f3' aufweist, mit einer von der Änderung des Parameterwert abhängigen Gewichtung zwischen den Primärfarbanteilen f3 und f2 zu berechnen.

Hierfür ist beispielsweise an der wenigstens einen Schnittstelle der Farbkamera ein Bedienelement zur Korrektur der Farbsättigung der Sekundärfarbe Gelb (Y) vorgesehen. Dem Bedienelement für eine Farbsättigungskorrektur des Farbbereichs Gelb ist eine Änderung dSY des Parameterwerts SY zugeordnet.

Die Sekundärfarbe Gelb kann aus den Primärfarben Rot (R) und Grün (G) additiv zusammengesetzt werden. Der Farbe Gelb (Y) ist im HSV-Farbraum der Farbbereich von 0° <= H <= 120° zugeordnet, welcher sich von Rot (R) über Gelb (Y) bis Grün (G) erstreckt und besonders einfach durch Anwendung der Bedingung b <= r und b <= g abgeprüft werden kann.

Als ein erstes Beispiel sei ein zu korrigierender Farbvektor <255, 128, 64> mit der Farbe Orange angenommen, der sich aus den Primärfarbanteilen r = 255, g = 128 und b = 64 zusammensetzt. Die Primärfarbanteile des Farbvektors <255, 128, 64> erfüllen mit der Zuordnung f1 = r = 255, f2 = g = 128 und f3 = b = 64 die Ungleichung f1 >= f2 >= f3. Des Weiteren gilt ist die Bedingung r > g > b. Damit gilt auch die Zuordnung von F1 zu R und von F2 zu G, wobei jeweils f1 F1 und f2 F2 zugeordnet sind.

Das Bildverarbeitungsmittel der Kamera ist eingerichtet, eine mit dem Bedienelement zur Farbsättigungskorrektur verbundene Operation auf den Farbvektor <255, 128, 64> zum Erhalt eines hinsichtlich der Farbsättigung der Farbe Gelb um den Parameterwert dSY korrigierten Farbvektors <r', g', b'> anzuwenden:

$$r' = r$$

$$g' = g$$

$$b' = b + (1-dSY)^*(g-b)$$

Als Ergebnis ergibt sich für dSY = 1.5 ein korrigierter Farbvektor <r', g', b'> = <255, 128, 96>, welcher ein stärker gesättigtes Orange repräsentiert.

Fig. 8 ist eine beispielhafte Darstellung der Werte für die Primärfarbanteile r, g und b über dem Farbton (H) von 0° bis 360° von Farbvektoren mit jeweils konstantem Wert für die Sättigung (S) von 50% und die Helligkeit (V) von 50%. Auf die jeweiligen Farbvektoren <r, g, b> wurde eine Farbsättigungskorrektur gemäß des vorangegangenen Beispiels mit dSY=2 angewandt, und als Ergebnis der jeweils zugeordnete korrigierte Farbvektoren <r', g', b'> erhalten. Die korrigierten Farbvektorkomponenten r', g' und b' wurden über dem jeweils den zugeordneten Komponenten r, g und b der zugeordneten H-Wert dargestellt.

Da r' gleich r und g' gleich g ist, fallen die zugehörigen Kurven jeweils zusammen und r' und g' sind nicht einzeln in der Abbildung zu erkennen. Aus dem Verlauf der Kurve von b' ist ersichtlich, dass alle Änderungen stetig erfolgen, dass die Wirkung bei H = 60°, also bei der Farbe Gelb, am größten ist und dass die Wirkung zu den inneren Rändern bei H = 0° und H = 120° hin stetig auf Null abnimmt.

Gemäß einem zweiten Aspekt der Erfindung ist an der wenigstens einen Schnittstelle der Kamera wenigstens ein der ersten Farbe zugeordnetes zweites Bedienelement zur Korrektur des Farbtons eines der ersten Farbe zugeordneten Farbbereichs vorgesehen. Dieses Bedienelement bewirkt erfindungsgemäß in Abhängigkeit von einer Änderung eines dem Farbton zugeordneten Parameters, dass das Bildverarbeitungsmittel der Kamera bei zu korrigierenden Farbvektoren, d.h. solchen Farbvektoren, welche dem Farbbereich angehören, den Wert eines Primärfarbanteils einer zweiten der ersten Farbe entgegengesetzten Primärfarbe absenkt und den Wert eines Primärfarbanteils der dritten, der ersten Farbe entgegengesetzten Primärfarbe erhöht.

Die Absenkung bzw. Erhöhung der Primärfarbanteile ist dabei wiederum bevorzugt jeweils für solche Farben eines zu korrigierenden Farbvektors, die einen geringen Farbabstand zur ersten Farbe aufweisen, größer als für solche Farben des zu korrigierenden Farbvektors, die einen größeren Farbabstand zur ersten Farbe aufweisen.

Hinsichtlich der in Hardware oder Software implementierten Bedienelemente sei angemerkt, dass dafür vorzugsweise sechs zweite Bedienelemente zur Korrektur des Farbtons, d.h. Farbtonkorrekturbedienelemente, an der Schnittstelle vorgesehen sind, die jeweils den Farben Rot (R), Gelb (Y), Grün (G), Cyan (C), Blau (B) und Magenta (M) als erste Farben zugeordnet sind. Bei einer besonders bevorzugten Alternative sind zwei zweite Bedienelement vorgesehen, von denen ein erstes zweites Bedienelement eine Auswahl zwischen den sechs möglichen ersten Farben (R, Y, G, C, B und M) ermöglicht und von denen ein zweites zweites Bedienelement für die eigentliche Eingaben bzw. Veränderung des Parameters zur Korrektur des Farbtons der mit dem ersten zweiten Bedienelement ausgewählten Farbe eingerichtet ist.

Damit sich eine Absenkung oder Erhöhung für solche Farben eines zu korrigierenden Farbvektors, die einen geringen Farbabstand zur ersten Farbe aufweisen, bevorzugt größer auswirkt als für solche Farben eines zu korrigierenden Farbvektors, die einen größeren Farbabstand zu der ersten Farbe aufweisen, kann die Wirkung, welche das Bildverarbeitungsmittel in der Kamera mit dem der ersten Farbe zugeordneten Bedienelement zur Korrektur des Farbtons verknüpft ist, auf mathematisch stetige Weise mit zunehmender farblicher Distanz des zu korrigierenden Farbvektors von der ersten Farbe abnehmen, oder proportional zu einer stetig monotonen Funktion der Differenz zweier Primärfarbanteile des zu korrigierenden Farbvektors sein.

Bevorzugt ist das Bildverarbeitungsmittel so eingerichtet, dass die Wirkung der Korrektur auf stetige Weise an inneren Grenzen des Farbbereiches Null erreicht.

Wie erläutert, bietet damit eine erfindungsgemäße Kamera, in besonders anwenderfreundlicher Weise, ein Bedienelement zur Korrektur des Farbtons einer ersten Primärfarbe F1, der der erste Farbbereich zugeordnet ist.

Ein zu korrigierender Farbvektor ist aus den Primärfarbanteilen f1, f2 und f3 zusammengesetzt. Diese Primärfarbanteile werden vom Bildverarbeitungsmittel den einzelnen Primärfarben so zugeordnet, sodass die Ungleichung f1 >= f2 >= f3 erfüllt wird. Der Primärfarbanteil f1 ist der ersten Primärfarbe F1 zugeordnet.

Das Bildverarbeitungsmittel der Kamera ist hierzu eingerichtet, bei einer Korrektur des Farbtons mittels eines der ersten Primärfarbe F1 zugeordneten Bedienelementes, den zweiten Primärfarbanteil f2' eines korrigierten Farbvektors mit den Primärfarbanteilen f1', f2' und f3' zu berechnen als

$$f2' = f2 - dH1 * (f1-f2),$$

und

den dritte Primärfarbanteil f3' des korrigierten Farbvektors <f1', f2', f3'> zu berechnen als

$$f3' = f3 + dH1 * (f1-f2),$$

wobei dH1 ein Wert ist, welcher rechnerisch aus dem Parameterwert dH des Bedienelements ermittelt wird.

Beispielsweise kann eine erfindungsgemäße Farbkamera an der wenigstens einen Schnittstelle mit einem Bedienelement zur Korrektur des Farbtons der Primärfarbe Rot ausgestattet sein. Dieses Bedienelement ermöglicht es damit einem Benutzer, einen Parameterwert dH einzugeben oder zu ändern, wobei dH bevorzugt einen Wertebereich von -128 bis 127 aufweist. Der Wertebereich von dH kann beispielsweise auf einen Wertebereich von dH1 von ungefähr -1 bis 1 mit der Vorschrift dH1 = dH /128 abgebildet werden. So wird beispielsweise ein Wert von dH = 64 abgebildet auf einen Wert von dH1 =½.

Als ein erstes Beispiel für eine erfindungsgemäße Farbtonkorrektur für den der Farbe Rot als eine erste Farbe zugeordneten Farbbereich sei als ein erster, zu korrigierender, oranger Beispielfarbvektor <255,128, 64> betrachtet. Für den ersten Beispielfarbvektor gilt r > g > b, sodass der Farbvektor erfindungsgemäß dem Farbbereich Rot angehört. Damit können folgende Zuordnungen getroffen werden: f1 = r = 255, f2 = g = 128, f3 =b=64.

Das Bildverarbeitungsmittel ist eingerichtet die folgende Operation zur Farbtonkorrektur auszuführen:

$$r' = r$$

$$g' = g - dH1 * (r-g)$$

$$b' = b + dH1 * (r-g).$$

Dadurch wird abgerundet als Ergebnis ein korrigierter Farbvektor <r', g', b'> = <255, 64, 128> erhalten, der die Farbe Rosa repräsentiert. Mit anderen Worten hat sich der Farbton von Orange nach Rosa verändert.

Durch zyklische Vertauschung der Werte und Zuordnungen kann der Fachmann auf gleiche Weise wie oben erläutert Beispiele für Operationen mit Bedienelementen zur Korrektur des Farbtons für die Farben Grün und/oder Blau herleiten.

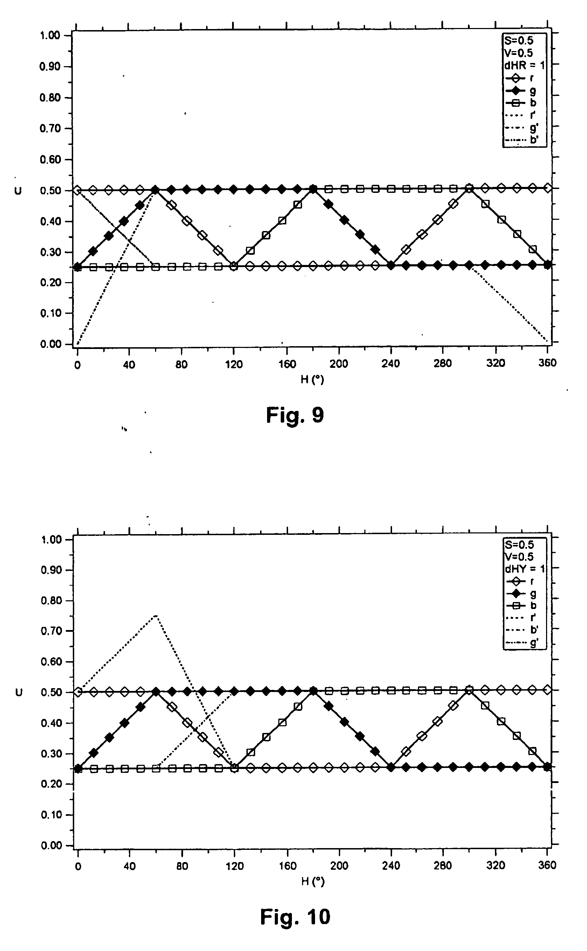

Fig. 9 ist eine beispielhafte Darstellung der Werte für die Primärfarbanteile r, g und b über dem Farbton (H) von 0° bis 360° von Farbvektoren mit jeweils konstantem Wert für die Sättigung S von 50% und die Helligkeit V von 50%, wobei auf die Komponenten r, g und b der Farbvektoren die Farbtonkorrektur gemäß dem zweiten Aspekt der Erfindung mit dHR=1 angewandt wurde. Alle anderen Parameter behielten ihren jeweiligen Neutralwert. Als Ergebnis wurden die zugeordnete Farbvektoren <r', g', b'> erhalten. Die Komponenten r', g' und b' sind über dem jeweils den zugeordneten Komponenten r, g und b zugeordneten H-Wert dargestellt.

Da r' gleich r ist, fallen die zugehörigen Kurven zusammen und r' ist nicht einzeln in der Abbildung zu erkennen. Aus den Verläufen der Kurven von g' und b' ist ersichtlich, dass alle Änderungen stetig erfolgen und dass die Wirkung bei H = 0°, also bei der Farbe Rot, am größten ist.

Im Folgenden sei nun die in einer erfindungsgemäßen Kamera implementierte Farbkorrektur für Sekundärfarben als erste Farben erläutert. Wie bereits erläutert, kann auch einer Sekundärfarbe SF1 als eine erste Farbe ebenfalls ein Farbbereich zugeordnet werden. Dem entsprechend ist an der wenigstens einen Schnittstelle der Kamera ein entsprechendes Bedienelement zur Korrektur des Farbtons eines dieser Sekundärfarbe als erste Farbe zugeordneten Farbbereiches vorgesehen.

Die erfindungsgemäße Implementierung nutzt dabei wiederum, dass sich eine Sekundärfarbe additiv aus zwei Primärfarben F1 und F2 zusammensetzen lässt. Die Primärfarbanteilen f1, f2 und f3 eines zu korrigierenden Farbvektors werden vom Bildverarbeitungsmittel wiederum den einzelnen Primärfarben so zugeordnet, dass die Ungleichung f1 >= f2 >= f3 erfüllt wird, wobei im Falle einer Sekundärfarbe der Primärfarbanteil f1 dann der ersten Primärfarbe F1 und der Primärfarbanteil f2 der zweiten Primärfarbe F2 zugeordnet sind.

Das Bildverarbeitungsmittel der Kamera ist so eingerichtet, bei einer Korrektur des Farbtons des der Sekundärfarbe zugeordneten Farbbereichs, ein korrigierter erster Primärfarbanteil f1' des korrigierten Farbvektors, der Primärfarbanteile f1', f2' und f3' aufweist, berechnet wird als

$$f1' = f1 - dH2 * (f2-f3),$$

und
der korrigierte zweite Primärfarbanteil f2' berechnet wird als

$$f2' = f2 + dH2 * (f2-f3),$$

wobei jeweils dH2 ein Wert ist, welcher rechnerisch aus dem Parameterwert H des Bedienelements ermittelt wird.

Zum besseren Verständnis der erfindungsgemäßen Farbtonkorrektur für einen einer Sekundärfarbe als erste Farbe zugeordneten Farbbereichs sein die Korrektur anhand eines Beispiels erläutert.

Eine erfindungsgemäße Farbkamera weist beispielsweise ein Bedienelement zur Korrektur des Farbtons der Sekundärfarbe Gelb auf. Der Sekundärfarbe Gelb Y sind die Primärfarben Rot R und Grün G zugeordnet.

Es sei nun weiter angenommen, dass ein Anwender durch das Bedienelement dem zugeordneten Parameter dH einen Wert von 64 zugewiesen hat. Durch eine Skalierung mit 1/128 ermittelt das Bildverarbeitungsmittel aus dH ein Wert für dH2 = 0.5.

Ein erster Beispielfarbvektor <r, g, b> = <255,128, 64>, der die Farbe Orange repräsentiert, gehört dem der Farbe Gelb Y zugeordneten Farbbereich an, wie bereits oben erläutert.

Damit kann das Bildverarbeitungsmittel folgende Zuordnungen treffen: f1 = r = 255, f2 = g = 128 und f3 = b = 64. Des Weiteren werden F1 der Farbe Rot R und F2 der Farbe Grün G zugeordnet.

Gemäß der obengenannten Formeln berechnet das Bildverarbeitungsmittel dann abgerundet den korrigierter Farbwertvektor <r', g', b'> = <223, 160, 64>, der die Farbe Beige repräsentiert.

Fig. 10 ist eine beispielhafte Darstellung der Werte für die Primärfarbanteile r, g und b über dem Farbton (H) von 0° bis 360° von Farbvektoren mit jeweils konstantem Wert für die Sättigung S von 50% und die Helligkeit V von 50%, wobei auf die Komponenten r, g und b die Farbtonkorrektur gemäß dem zweiten Aspekt der Erfindung mit dHY=2 angewandt wurde. Alle anderen Parameter wurden auf ihren jeweiligen Neutralwert gehalten, und als Ergebnis zugeordnete Farbvektoren <r', g', b'> erhalten. Die Komponenten r', g' und b' der korrigierten Farbvektoren sind über dem jeweils den zugeordneten Komponenten r, g und b zugeordneten H-Wert dargestellt.

Da b' gleich b ist, fallen die zugehörigen Kurven zusammen und b' ist nicht einzeln in der Abbildung zu erkennen. Aus den Verläufen der Kurven von r' und g' ist ersichtlich, dass alle Änderungen stetig erfolgen, dass die Wirkung bei H = 60°, also bei der Farbe Gelb, am größten ist und dass die Wirkung zu den Rändern des Farbbereiches hin auf stetig auf Null abnimmt.

Gemäß einem dritten Aspekt der Erfindung ist an der wenigstens einen Schnittstelle der Kamera wenigstens ein der ersten Farbe zugeordnetes drittes Bedienelement zur Korrektur der Farbhelligkeit eines der ersten Farbe zugeordneten Farbbereichs vorgesehen. Dieses Bedienelement bewirkt erfindungsgemäß in Abhängigkeit von einer Änderung eines der Farbhelligkeit zugeordneten Parameters, dass das Bildverarbeitungsmittel der Kamera bei zu korrigierenden Farbvektoren, d.h. solchen Farbvektoren, welche dem Farbbereich angehören, in Abhängigkeit einer Eingabe mittels des Bedienelements für solche Werte des Parameters, die einer Erhöhung der Farbhelligkeit zugeordnet sind, Werte der Primärfarbanteile der Primärfarben, aus denen sich die erste Farbe additiv zusammensetzen lässt, erhöht bzw. für solche Werte des Parameters, die einer Verringerung der Farbhelligkeit zugeordnet sind, Werte der Primärfarbanteile der Primärfarben, aus denen sich die erste Farbe additiv zusammensetzen lässt, verringert.

Erfindungsgemäß ist die Erhöhung jeweils für solche Farben eines zu korrigierenden Farbvektors, die einen geringen Farbabstand zur ersten Farbe aufweisen, größer als für solche Farben des zu korrigierenden Farbvektors, die einen größeren Farbabstand zur ersten Farbe aufweisen.

Hinsichtlich der in Hardware oder Software implementierten Bedienelemente sei angemerkt, dass dafür vorzugsweise sechs dritte Bedienelemente zur Korrektur der Farbhelligkeit, d.h. Farbhelligkeitskorrekturbedienelemente, an der Schnittstelle vorgesehen sind, die jeweils den Farben Rot (R), Gelb (Y), Grün (G), Cyan (C), Blau (B) und Magenta (M) als erste Farben zugeordnet sind. Bei einer besonders bevorzugten Alternative sind zwei dritte Bedienelement vorgesehen, von denen ein erstes drittes Bedienelement eine Auswahl zwischen den sechs möglichen ersten Farben (R, Y, G, C, B und M) ermöglicht und von denen ein zweites drittes Bedienelement für die eigentliche Eingaben bzw. Veränderung des Parameters zur Korrektur des Farbtons der mit dem ersten zweiten Bedienelement ausgewählten Farbe eingerichtet ist.

Damit sich eine Absenkung oder Anhebung für solche Farben eines zu korrigierenden Farbvektors, die einen geringen Farbabstand zur ersten Farbe aufweisen, stärker auswirkt als für solche Farben eines zu korrigierenden Farbvektors, die einen größeren Farbabstand zu der ersten Farbe aufweisen, kann die Wirkung, welche das Bildverarbeitungsmittel in der Kamera mit dem der ersten Farbe zugeordneten Bedienelement zur Korrektur der Farbhelligkeit verknüpft, auf mathematisch stetige Weise mit zunehmender farblicher Distanz des zu korrigierenden Farbvektors von der ersten Farbe abnehmen, oder proportional zu einer stetig monotonen Funktion der Differenz zweier Primärfarbanteile des zu korrigierenden Farbvektors sein.

Das Bildverarbeitungsmittel ist bevorzugt so konfiguriert, dass die Wirkung kann auf stetige Weise an inneren Grenzen des Farbbereiches Null erreicht.

Damit bietet eine erfindungsgemäße Kamera, in besonders anwenderfreundlicher Weise, ein Bedienelement zur Korrektur der Farbhelligkeit eines einer ersten Primärfarbe F1 zugeordneten Farbbereichs.

Ein zu korrigierender Farbvektor ist wieder aus den Primärfarbanteilen f1, f2 und f3 zusammengesetzt. Diese Primärfarbanteile werden vom Bildverarbeitungsmittel den einzelnen Primärfarben so zugeordnet, sodass die Ungleichung f1 >= f2 >= f3 erfüllt wird. Der Primärfarbanteil f1 ist der ersten Primärfarbe F1 zugeordnet.

Das Bildverarbeitungsmittel der Kamera ist so eingerichtet, dass bei einer Korrektur der Helligkeit mittels eines der ersten Primärfarbe F1 zugeordneten Bedienelementes, einen korrigierten ersten Primärfarbanteil f1' eines korrigierten Farbvektors zu berechnen als

$$f1' = f1 + dV1 * (f1-f2),$$

wobei jeweils dV1 ein Wert ist, welcher rechnerisch aus dem Parameterwert V des Bedienelements ermittelt wird.

Zum besseren Verständnis sei angenommen, dass eine erfindungsgemäße Farbkamera mit einem Bedienelement zur Korrektur der Farbhelligkeit der Farbe Rot (R) ausgestattet ist. Mittels dieses Bedienelements kann ein Benutzer der Kamera beispielsweise einen Parameterwert V auf 192 setzen. In diesem Beispiel sei der Wertebereich von V von 0 bis 255 angenommen, wobei der Neutralwert bei V = 128 liegt. Aus V = 192 errechnet sich ein Änderungswert dV1 = (V/128) -1 = 0.5, der eine Anhebung der Helligkeit um 50% repräsentiert.

Nun sei ein zu korrigierender Beispielfarbvektor <r, g, b> = <128, 64, 32> angenommen, der eine Farbe Braun repräsentiert.

Das Bildverarbeitungsmittel trifft folgende Zuordnungen: f1 = r = 128, f2 = g = 64 und f3 = b = 32, sodass die Ungleichung f1 >= f2 >= f3 erfüllt wird.

Zur Korrektur der Helligkeit wendet das Bildverarbeitungsmittel dann folgende Gleichungen an:

$$r' = r + dV1*(r-g);$$

$$g' = g + dV1*(r-g);$$

und

$$b' = b + dV1*(r-g)$$

Als Ergebnis wird ein korrigierter Farbvektor y = (r', g', b') = (160, 96, 64) erhalten, der ein Hellbraun repräsentiert.

Fig. 11 ist eine beispielhafte Darstellung der Werte für die Primärfarbanteile r, g und b über dem Farbton (H)

von 0° bis 360° von Farbvektoren mit jeweils konstantem Wert für die Sättigung S von 50% und die Helligkeit V von 50%, wobei auf die Komponenten r, g und b der Farbvektoren die Farbtonhelligkeitskorrektur gemäß dem dritten Aspekt der Erfindung mit dVR=0.5 angewandt wurde. Alle anderen Parameter behielten ihren jeweiligen Neutralwert. Als Ergebnis wurden die zugeordnete Farbvektoren <r', g', b'> erhalten. Die Komponenten r', g' und b' sind über dem jeweils den zugeordneten Komponenten r, g und b zugeordneten H-Wert dargestellt.

Im Folgenden sei noch die in einer erfindungsgemäßen Kamera implementierte Helligkeitskorrektur für Sekundärfarben als erste Farben erläutert. Wie bereits erläutert, kann auch einer Sekundärfarbe SF1 als eine erste Farbe ebenfalls ein Farbbereich zugeordnet werden. Dem entsprechend ist an der wenigstens einen Schnittstelle der Kamera ein entsprechendes Bedienelement zur Korrektur der Helligkeit eines dieser Sekundärfarbe als erste Farbe zugeordneten Farbbereiches vorgesehen.

Die erfindungsgemäße Implementierung nutzt dabei wiederum, dass sich eine Sekundärfarbe additiv aus zwei Primärfarben F1 und F2 zusammensetzen lässt. Die Primärfarbanteilen f1, f2 und f3 eines zu korrigierenden Farbvektors werden vom Bildverarbeitungsmittel wiederum den einzelnen Primärfarben so zugeordnet, dass die Ungleichung f1 >= f2 >= f3 erfüllt wird, wobei im Falle einer Sekundärfarbe der Primärfarbanteil f1 dann der ersten Primärfarbe F1 und der Primärfarbanteil f2 der zweiten Primärfarbe F2 zugeordnet sind.

Das Bildverarbeitungsmittel der Kamera ist so eingerichtet, bei einer Korrektur des Farbtons des der Sekundärfarbe zugeordneten Farbbereichs, ein korrigierter erster Primärfarbanteil f1' des korrigierten Farbvektors, der Primärfarbanteile f1', f2' und f3' aufweist, berechnet wird als

$$f1' = f1 + dV2 * (f2-f3),$$

und

ein korrigierter zweiter Primärfarbanteil f2' berechnet wird als

$$f2' = f2 + dV2 * (f2-f3),$$

wobei jeweils dV2 ein Wert ist, welcher rechnerisch aus dem Parameterwert V des Bedienelements ermittelt wird.

Zur Erläuterung einer erfindungsgemäßen Helligkeitskorrektur für einen einer Sekundärfarbe als erste Farbe zugeordneten Farbbereiches sei eine erfindungsgemäße Farbkamera mit mindestens einem Bedienelement zur Korrektur der Farbhelligkeit der Sekundärfarbe Gelb (Y) betrachtet.

Durch dieses Bedienelement kann der Benutzer einen Parameterwert V beispielsweise auf 192 setzen, wobei in diesem Beispiel der Wertebereich von V sich von 0 bis 255 erstreckt und der Neutralwert bei V = 128 liegt. Aus V = 192 kann das Bildverarbeitungsmittel einen Wert dV2 = (V/128) -1 = 0.5 entsprechend einer Anhebung der Helligkeit um 50% errechnen.

Nun sei ein zu korrigierender Beispielfarbvektor <r, g, b> = <128, 64, 32> betrachtet, der ein Braun repräsentiert. Das Bildverarbeitungsmittel trifft folgende Zuordnungen: f1 = r = 128, f2 = g = 64 und f3 = b = 32, sodass die Ungleichung f1 >= f2 >= f3 erfüllt ist. Weiter werden der Primärfarbanteil f1 der Primärfarbe F1 und der Primärfarbanteil f2 der Primärfarbe F2 zugeordnet.

Zur Korrektur der Helligkeit sind im Bildverarbeitungsmittel dann beispielsweise folgende Gleichungen implementiert:

$$r' = r + dV1*(g-b);$$

$$r' = g + dV1*(g-b);$$

und

$$r' = b + dV1*(g-b)$$

Als Ergebnis wird ein korrigierter Farbvektor <r', g', b'> = <144, 80, 48> erhalten, der ein helleres Braun repräsentiert als der ursprüngliche Farbvektor vor der Helligkeitskorrektur.

Fig. 12 ist eine beispielhafte Darstellung der Werte für die Primärfarbanteile r, g und b über dem Farbton (H) von 0° bis 360° von Farbvektoren mit jeweils konstantem Wert für die Sättigung S von 50% und die Helligkeit V von 50%, wobei auf die Komponenten r, g und b die Farbtonkorrektur gemäß dem zweiten Aspekt der Erfindung mit dVY=0.5 angewandt wurde. Alle anderen Parameter wurden auf ihren jeweiligen Neutralwert gehalten, und als Ergebnis zugeordnete Farbvektoren <r', g', b'> erhalten. Die Komponenten r', g' und b' der korrigierten Farbvektoren sind über dem jeweils den zugeordneten Komponenten r, g und b zugeordneten H-Wert dargestellt.

Hier sei noch angemerkt, dass die vorstehend diskutierten Aspekte einer erfindungsgemäßen Farbkorrektur in frei wählbarer Reihenfolge mit anderen Farboperationen oder Farbkorrekturen kombiniert werden kann. So ist es beispielsweise möglich, Farbbilddaten von einem Bildsensor zunächst mittels einer 3x3 Farbmatrix zu korrigieren, danach eine erfindungsgemäße Farbkorrektur auszuführen und nachfolgend die Daten in den bekannten YUV-Farbraum zu transformieren und als YUV-Farbdaten auszugeben. Auch ist es beispielsweise möglich, Farbdaten eines CMYG-Sensors durch eine bekannte Farbraumtransformation in den RGB-Raum zu übertragen, danach einen oder mehrere Aspekte einer erfindungsgemäßen Farbkorrektur auszuführen und nachfolgend die Daten mit einer bekannten, nichtlinearen Farbraumtransformation in den bekannten sRGB-Farbraum zu übertragen und danach als sRGB-Daten zur Verfügung zu stellen, z.B. auszugeben.

Schließlich sei noch einmal darauf hingewiesen, dass es selbstverständlich auch möglich ist, Rohdaten eines Sensors aus der Kamera mit einem Kabel auf einen Computer, z.B. einen sogenannten Frame Grabber, auf bekannte Weise zu übertragen, dort ein bekanntes, sogenanntes Demosaicing durchzuführen, die daraus erhaltenen Daten in den sRGB-Farbraum zu transformieren und dort eine erfindungsgemäße Farbkorrektur durchzuführen und sie schließlich anderen Programmen des Computers als Bilddaten für eine automatische Auswertung zur Verfügung zu stellen.

Die voranstehend näher erläuternden Ausführungsbeispiele weisen teilweise unterschiedliche Ausgestaltungsformen und unterschiedliche Detaillösungen auf, jedoch sind sämtliche Ausgestaltungsformen und Detaillösungen auch alternativ oder in Kombination mit den dargestellten, aber auch mit nicht dargestellten und beschriebenen Ausführungsformen im Rahmen der vorliegenden Erfindung denkbar.

## Patentansprüche

1. Farbkamera mit wenigstens einer Schnittstelle, die zur Einstellung wenigstens eines Parameters durch einen Benutzer für eine Korrektur der Farbsättigung als eine erste Eigenschaft eines Farbbereiches (31), der einer aus Primär- und Sekundärfarben (R,Y,G, C, B, M) auswählbaren ersten Farbe zugeordnet ist, in der Kamera eingerichtet ist,
wobei die Farbkamera ausgestaltet ist, den Farbbereich (31) als Wertebereich in einem Farbraum, der von Primärfarben (R, G, B) aufgespannt ist, durch das Größenverhältnis der Primärfarbanteile zu wählen,
wobei die Farbkamera ausgestaltet ist, einen einem bestimmten Bildpunkt zugeordneten Farbvektor (32, 33) mit Primärfarbanteilen (r, g, b) in einen korrigierten Farbvektor zu ändern,
wobei die Farbkamera ausgestaltet ist, die Zugehörigkeit des Farbvektors zu dem Farbbereich anhand des Größenverhältnisses der Primärfarbanteile festzustellen,
wobei, falls der Farbvektor (32, 33) dem Farbbereich angehört, das Ändern in einen korrigierten Farbvektor erfolgt, indem die Farbkamera bei einer Einstellung des Parameters, die einer Erhöhung der Farbsättigung entspricht, die Primärfarbanteile des Farbvektors (32, 33), die der ersten Farbe entgegengesetzt sind, also die in additiver Mischung eine zweite Farbe bilden, die gemeinsam mit der ersten Farbe ein Paar von Komplementärfarben bildet, absenkt, und bei einer Einstellung des Parameters, die einer Erniedrigung der Farbsättigung entspricht, die Primärfarbanteile des Farbvektors (32, 33), die der ersten Farbe entgegengesetzt sind, anhebt,
wobei, falls der Farbvektor (32. 33) dem Farbbereich angehört; die Wirkung der Korrektur für solche Farben des Farbvektors, die einen geringeren Farbabstand zu der ersten Farbe aufweisen, größer ist als für solche Farben des Farbvektors, die einen größeren Farbabstand zu der ersten Farbe aufweisen, mit zunehmendem Farbabstand stetig abnimmt und an inneren Grenzen des Farbbereichs auf Null abnimmt,
wobei, falls der Farbvektor (32, 33) dem Farbbereich nicht angehört, keine mit dem Parameter verbundene Korrektur des Farbvektors erfolgt,
und wobei, falls die erste Farbe eine Primärfarbe (R, G, B) ist, der Farbbereich so gewählt wird, dass der dieser Farbe zugeordnete Primärfarbanteil größer oder gleich den anderen Primärfarbanteilen ist, und falls die erste Farbe eine Sekundärfarbe (C, M, Y) ist, der Farbbereich so gewählt wird, dass der dieser Farbe zugeordnete entgegengesetzte Primärfarbanteil kleiner oder gleich den anderen Primärfarbanteilen ist.

2. Farbkamera gemäß Anspruch 1,
wobei sich der Farbvektor aus einem ersten Primärfarbanteil f1, zweiten Primärfarbanteil f2 und dritten Primärfarbanteil f3 zusammensetzt, wobei die Primärfarbanteile f1, f2 und f3 die Komponenten des Farbvektors in ungeordneter Reihenfolge sind,

wobei die Farbkamera eingerichtet ist, die Primärfarbanteile einzelnen Primärfarben derart zuzuordnen, dass f1 >= f2 >= f3 gilt, wobei der erste Primärfarbanteil f1 einer ersten Primärfarbe F1 zugeordnet ist und die erste Primärfarbe F1 dem entsprechenden Farbbereich zuordenbar ist.

3.  Farbkamera gemäß Anspruch 2,
    wobei die Farbkamera eingerichtet ist, bei einer Korrektur der Farbsättigung einer ersten Primärfarbe F1, der der Farbbereich zugeordnet ist, den Farbvektor derart zu ändern,
    dass ein korrigierter zweiter Primärfarbanteil f2' des korrigierten Farbvektors mit einer vom Parameterwert dS abhängigen Gewichtung zwischen dem zweiten Primärfarbanteil f2 und dem ersten Primärfarbanteil f1 berechnet wird,
    wobei die Gewichtung als ein gewichtetes arithmetisches Mittel der Form

$$c = (1\text{-}alpha)*a + alpha*b$$

mit den Eingangsgrößen a und b und dem Gewichtungsparameter alpha definiert ist, und wobei der Wertebereich des Gewichtungsparameters alpha über den Bereich von 0 bis 1 hinausreicht,
und
dass der korrigierte dritte Primärfarbanteil f3' mit einer vom Parameterwert dS abhängigen Gewichtung zwischen dem dritten Primärfarbanteil f3 und dem ersten Primärfarbanteil f1 berechnet wird,
wobei ein korrigierter zweiter Primärfarbanteil f2' des korrigierten Farbvektors als

$$f2' = f2 + (1 - dSR)*(f1\text{-}f2)$$

und
ein korrigierter dritter Primärfarbanteil f3' als

$$f3' = f3 + (1 - dSR)*(f1\text{-}f2)$$

berechnet werden,
wobei dSR ein Wert ist, welcher rechnerisch aus dem Parameterwert dS ermittelt wird.

4.  Farbkamera gemäß Anspruch 2,
    wobei eine erste Sekundärfarbe aus zwei Primärfarben F1 und F2 additiv zusammengesetzt ist und der erste Primärfarbanteil f1 der ersten Primärfarbe F1 und der zweiten Primärfarbanteil f2 der zweiten Primärfarbe F2 zugeordnet ist, und
    wobei die Farbkamera eingerichtet ist, bei einer Korrektur der Farbsättigung der ersten Sekundärfarbe SF1, der der Farbbereich zugeordnet ist, den Farbvektor derart zu ändern,
    dass ein korrigierter dritter Primärfarbanteil f3' des korrigierten Farbvektors mit einer vom Parameterwert dS abhängigen Gewichtung zwischen dem dritten Primärfarbanteil f3 und dem ersten Primärfarbanteil f1 berechnet wird,
    wobei die Gewichtung als ein gewichtetes arithmetisches Mittel der Form
    c = (1-alpha)*a + alpha*b
    mit den Eingangsgrößen a und b und dem Gewichtungsparameter alpha definiert ist, und wobei der Wertebereich des Gewichtungsparameters alpha über den Bereich von 0 bis 1 hinausreicht,
    wobei ein korrigierter dritter Primärfarbanteil f3' des korrigierten Farbvektors als

$$f3' = f3 + (1\text{-}dSY)*(f2\text{-}f3)$$

berechnet wird,
wobei dSY ein Wert ist, welcher rechnerisch aus dem Parameterwert dS ermittelt wird.

5.  Farbkamera gemäß einem der vorangehenden Ansprüche,

wobei die wenigstens eine Schnittstelle weiter zur Einstellung eines zweiten Parameters dH für eine Korrektur des Farbton-Wertes als eine zweite Eigenschaft des Farbbereiches in der Farbkamera eingerichtet ist,
wobei die Farbkamera weiter eingerichtet ist, bei einer Änderung des zweiten Parameters den Farbvektor derart zu verändern,
dass der Primärfarbanteil einer zweiten, der ersten Farbe entgegen gesetzten Primärfarbe abgesenkt wird und dass der Primärfarbanteil einer dritten, der ersten Farbe entgegen gesetzten Primärfarbe erhöht wird,
wobei die Absenkung oder Erhöhung jeweils für solche Farben des Farbvektors erfolgt, die einen geringen farblichen Abstand zu der ersten Farbe aufweisen, größer ist als für solche Farben des Farbvektors, die einen größeren farblichen Abstand zu der ersten Farbe aufweisen.

6. Farbkamera gemäß Anspruch 5 und Anspruch 2,
wobei die Farbkamera eingerichtet ist, bei einer Korrektur des Farbton-Wertes einer ersten Primärfarbe F1, der der Farbbereich zugeordnet ist, den Farbvektor derart zu ändern,
dass ein korrigierter zweiter Primärfarbanteil f2' des korrigierten Farbvektors als

$$f2 - dH1 * (f1-f2)$$

und
dass ein korrigierter dritter Primärfarbanteil f3' als

$$f3 + dH1 * (f1-f2)$$

berechnet werden,
wobei dH1 ein Wert ist, welcher rechnerisch aus dem Parameterwert dH ermittelt wird.

7. Farbkamera gemäß Anspruch 5 und Anspruch 2,
wobei eine erste Sekundärfarbe aus zwei Primärfarben F1 und F2 additiv zusammengesetzt ist und der erste Primärfarbanteil f1 der ersten Primärfarbe F1 und der zweiten Primärfarbanteil f2 der zweiten Primärfarbe F2 zugeordnet ist, und
wobei die Farbkamera eingerichtet ist, bei einer Korrektur des Farbton-Wertes der ersten Sekundärfarbe SF1, der der Farbbereich zugeordnet ist, den Farbvektor derart zu ändern,
dass ein korrigierter erster Primärfarbanteil f1' eines korrigierten Farbvektors als

$$f1 - dH2 * (f2-f3)$$

und
dass ein korrigierter zweiter Primärfarbanteil f2' als

$$f2 + dH2 * (f2-f3)$$

berechnet werden,
wobei dH2 ein Wert ist, welcher rechnerisch aus dem Parameterwert dH ermittelt wird.

8. Farbkamera gemäß einem der vorangehenden Ansprüche,
wobei die wenigstens eine Schnittstelle weiter zur Einstellung eines dritten Parameters dV für eine Korrektur der Farbheiligkeit als eine dritte Eigenschaft des Farbbereichs in der Farbkamera eingerichtet ist,
wobei die Farbkamera weiter eingerichtet ist, bei einer Änderung des dritten Parameters,
die einer Erhöhung der Farbheiligkeit zugeordnet ist, den Wert der Primärfarben, aus denen sich die erste Farbe additiv zusammensetzen lässt, zu erhöhen,
wobei die Erhöhung jeweils für solche Farben des Farbvektors, die einen geringen Farbabstand zu der ersten Farbe aufweisen, größer ist als für solche Farben des Farbvektors, die einen größeren Farbabstand zu der ersten Farbe aufweisen.

9. Farbkamera gemäß Anspruch 8 und Anspruch 2,
   wobei die Farbkamera eingerichtet ist, bei einer Korrektur der Farbhel-ligkeit einer ersten Primärfarbe F1, der der Farbbereich zugeordnet ist, den Farbvektor derart zu ändern,
   indem ein korrigierter erster Primärfarbanteil f1' des korrigierten Farbvektors berechnet wird, als

$$f1 + dV1 * (f1\text{-}f2),$$

   wobei dV1 ein Wert ist, welcher rechnerisch aus dem Parameterwert dV ermittelt wird.

10. Farbkamera gemäß Anspruch 8 und rückbezogen auf Anspruch 2,
    wobei eine erste Sekundärfarbe SF1 aus zwei Primärfarben F1 und F2 additiv zusammengesetzt ist, und der erste Primärfarbanteil f1 der ersten Primärfarbe F1 und der zweiten Primärfarbanteil f2 der zweiten Primärfarbe F2 zugeordnet ist, und
    wobei die Farbkamera eingerichtet ist, bei einer Korrektur des Farbton-Wertes der ersten Sekundärfarbe SF1, der der Farbbereich zugeordnet ist, den Farbvektor derart zu ändern,
    dass ein korrigierter erster Primärfarbanteil f1' des korrigierten Farbvektors berechnet wird als

$$f1 + dV2 * (f2\text{-}f3)$$

    und
    dass ein korrigierter zweiter Primärfarbanteil f2' als

$$f2 + dV2 * (f2\text{-}f3),$$

    wobei jeweils dV2 ein Wert ist, weicher rechnerisch aus dem Parameterwert dV ermittelt wird.

11. Farbkamera gemäß einem der vorangehenden Ansprüche,
    wobei die Farbkamera eingerichtet ist, die Wirkung, welche mit einer der ersten Farbe zugeordneten Änderung eines Parameters zur Korrektur einer Eigenschaft des Farbbereichs verknüpft ist,
    auf mathematisch stetige Weise mit zunehmender farblicher Distanz des Farbvektors von der ersten Farbe zu reduzieren, oder
    proportional zu einer stetig monotonen Funktion der Differenz zweier Primärfarbanteile des Farbvektors zu reduzieren, oder
    proportional zu einer Differenz zweier Primärfarbanteile des Farbvektors umzusetzen,
    sodass die Wirkung mit zunehmendem Farbabstand stetig abnimmt und an inneren Grenzen des Farbbereichs auf Null abnimmt.

12. Farbkamera gemäß einem der vorangehenden Ansprüche,
    wobei an der Schnittstelle Einstellmittel zur Einstellung des wenigsten einen Parameters vorgesehen sind,
    wobei sechs Einstellmittel zur Korrektur des wenigstens einen Parameters, wobei dem jeweiligen Einstellmittel des Farbbereichs vorgesehen sind, denen eine jeweilige der sechs Farben Rot (R), Gelb (Y), Grün (G), Cyan (C), Blau (B) bzw. Magenta (M) entsprechend der dem Farbbereich zugeordneten ersten Farbe zugeordnet ist,
    wobei zwei Bedienelemente vorgesehen sind, von denen ein erstes Bedienelement zur Auswahl zwischen den sechs der ersten Farben eingerichtet ist und ein zweites Bedienelement zur Veränderung des wenigsten einen Parameters für die durch das erste Bedienelement ausgewählten Farbe ist.

## Claims

1. A colour camera, comprising at least one interface which is adapted in the camera for adjustment by a user of at least one parameter for correcting the colour saturation as a first property of a colour region (31) associated with a first colour selectable from primary and secondary colours (R, Y, G, C, B, M),
   wherein the colour camera is configured to select the colour region (31), as a range of values in a colour space enclosed by primary colours (R, G, B), by using the ratios of the primary colour components,

wherein the colour camera is configured to change a colour vector (32, 33) associated with a given pixel and having primary colour components (r, g, b) into a corrected colour vector,

wherein the colour camera is configured to determine the colour region to which the colour vector belongs on the basis of the ratios of the primary colour components,

wherein the colour vector (32, 33), if it belongs to the colour region, is changed to a corrected colour vector by the colour camera reducing the primary colour components of the colour vector (32, 33) which are complementary to the first colour, that is to say which form a second colour on additive mixing that forms a pair of complementary colours with the first colour, when making a parameter adjustment corresponding to an increase in colour saturation, and increasing the primary colour components of the colour vector (32, 33) that are complementary to the first colour when making a parameter adjustment corresponding to a reduction in colour saturation,

wherein, if the colour vector (32, 33) belongs to the colour region, the effect of the correction is greater for such colours in the colour vector which have a smaller colour difference from the first colour, than for such colours of the colour vector which have a larger colour difference from the first colour, and decreases continuously with increasing colour difference and decreases to zero at inner boundaries of the colour region,

wherein no colour vector correction associated with the parameter is made if the colour vector (32,33) does not belong to the colour region,

and wherein, if the first colour is a primary colour (R, G, B), the colour region is selected such that the primary colour component associated with said colour is greater than or equal to the other primary colour components, and, if the first colour is a secondary colour (Y, C, M), the colour region is selected such that the complementary primary colour component associated with said colour is smaller than or less than the other primary colour components.

2. The colour camera according to claim 1,
wherein the colour vector is composed of a first primary colour component f1, a second primary colour component f2 and a third primary colour component f3, the primary colour components f1, f2 and f3 being the components of the colour vector in any order,

wherein the colour camera is adapted to associate the primary colour components with individual primary colours in such a way that f1 >= f2 >= f3, wherein the first primary colour component f1 is associated with a first primary colour F1 and the first primary colour F1 is associated with the corresponding colour region by means of the hue value.

3. The colour camera according to claim 2,
wherein the colour camera is adapted to change the colour vector in such a way, when correcting the colour saturation of a first primary colour F1 associated with the colour region using the ratios of its primary colour components, that a corrected second primary colour component f2' of the corrected colour vector is calculated using a weighting of the second primary colour component f2 and the first primary colour component f1 which is dependent on the value of the parameter,

wherein the weighting is defined as a weighted arithmetic mean in the form c =

$$(1-alpha)*a + alpha*b$$

with input variables a and b and weighting parameter alpha, and wherein the range of values of weighting parameter alpha extends beyond the range from 0 to 1,

and that the corrected third primary colour component f3' is calculated using a weighting between the third primary colour component f3 and the first primary colour component f1 which is dependent on the value of said parameter, wherein a corrected second primary colour component f2' of the corrected colour vector is calculated as

$$f2' = f2 + (1 - dSR)*(f1-f2)$$

and
a corrected third primary colour component f3' is computed as

$$f3' = f3 + (1 - dSR)*(f1-f2),$$

where dSR is a value that is calculated arithmetically from the value of the parameter.

**4.** The colour camera according to claim 2,
wherein a first secondary colour is composed by adding two primary colours F1 and F2, and the first primary colour component f1 is associated with the first primary colour F1 and the second primary colour component f2 is associated with the second primary colour F2, and
wherein the colour camera is adapted to change the colour vector, when correcting the colour saturation of the first secondary colour SF1 associated with the colour region using the ratios of its primary colour components, in such a way
that a corrected third primary colour component f3' of the corrected colour vector is calculated using a weighting between the third primary colour component f3 and the first primary colour component f1 which is dependent on the value of said parameter, wherein the weighting is defined as a weighted arithmetic average in the form

$$c = (1-alpha)*a + alpha*b$$

with input variables a and b and weighting parameter alpha, and wherein the range of values of weighting parameter alpha extends beyond the range from 0 to 1,
wherein a corrected third primary colour component f3' of the corrected colour vector is calculated as

$$f3' = f3 + (1 - dSY)*(f^2 - f^3),$$

where dSY is a value that is calculated arithmetically from the value of the parameter.

**5.** The colour camera according to any one of the preceding claims,
wherein the at least one interface is further adapted to adjust a second parameter in the colour camera for correcting the hue value as a second property of the colour region,
wherein the colour camera is further adapted to change the colour vector in such a way, when the second parameter changes, that the primary colour component of a second primary colour complementary to the first colour is decreased and that the primary colour component of a third primary colour complementary to the first colour is increased,
wherein the increase and the decrease is done in each case for such colours of the colour vector which have a small colour difference from the first colour, and is larger for such colours of the colour vector that have a larger colour difference from the first colour.

**6.** The colour camera according to claim 5 and claim 2,
wherein the colour camera is adapted to change the colour vector, when correcting the hue value of a first primary colour F1 associated with the colour region, in such a way that a corrected second primary colour component f2' of the corrected colour vector is calculated as

$$f2 - dH1 * (f1-f2)$$

and
that a corrected third primary colour component f3' is calculated as

$$f3 + dH1 * (f1-f2),$$

where dH1 is a value that is calculated arithmetically from the value of the second parameter.

**7.** The colour camera according to claim 5 and claim 2,
wherein a first secondary colour is composed by adding two primary colours F1 and F2, and the first primary colour component f1 is associated with the first primary colour F1 and the second primary colour component f2 is associated with the second primary colour F2, and
wherein the colour camera is adapted to change the colour vector, when correcting the hue value of the first secondary colour SF1 associated with the colour region, in such a way
that a corrected first primary colour component f1' of a corrected colour vector is calculated as

22

$$f1 - dH2 * (f2-f3)$$

and
that a corrected second primary colour component f2' is calculated as

$$f2 + dH2 * (f2-f3),$$

where dH2 is a value that is calculated arithmetically from the value of the second parameter.

8. The colour camera according to any one of the preceding claims,
wherein the at least one interface is further adapted in the colour camera to adjust a third parameter for correcting the brightness as a third property of the colour region,
wherein the colour camera is further adapted to increase the value of the primary colours of which the first colour is additively composed, when a change associated with an increase in brightness occurs in the third parameter, wherein the increase is done in each case for such colours of the colour vector which have a small colour difference from the first colour, and is larger for such colours of the colour vector that have a larger colour difference from the first colour.

9. The colour camera according to claim 8 and claim 2,
wherein the colour camera is adapted to change the colour vector in such a way, when correcting the brightness of a first primary colour F1 associated with the colour region,
such that a corrected first primary colour component f1' of the corrected colour vector is calculated as

$$f1 + dV1 * (f1-f2),$$

where dV1 is a value that is calculated arithmetically from the value of the third parameter.

10. The colour camera according to claim 8 and claim 2,
wherein a first secondary colour SF is composed by adding two primary colours F1 and F2, and the first primary colour component f1 is associated with the first primary colour F1 and the second primary colour component f2 is associated with the second primary colour F2, and
wherein the colour camera is adapted to change the colour vector, when correcting the hue value of the first secondary colour SF1 associated with the colour region, in such a way
that a corrected first primary colour component f1' of the corrected colour vector is calculated as

$$f1 + dV2 * (f2-f3)$$

und
that a corrected second primary colour component f2' is calculated as

$$f2 + dV2 * (f2-f3),$$

where dV2 in each case is a value that is calculated arithmetically from the value of the third parameter.

11. The colour camera according to any one of the preceding claims,
wherein the colour camera is adapted to reduce the effect associated with a parameter change assigned to the first colour in order to correct a property of the colour region
in a mathematically continuous manner the greater the colour difference of the colour vector from the first colour, or to reduce it in proportion to a strictly monotone function of the difference between two primary colour components of the colour vector, or
to convert it in proportion to a difference between two primary colour components of the colour vector, such that the effect decreases continuously with increasing colour difference and decreases to zero at the inner boundaries of the colour region.

12. The colour camera according to any one of the preceding claims,
    wherein adjusting means for adjusting the at least one parameter are provided at the interface,
    wherein six adjusting means for correcting the at least one parameter are provided, to each of which one of six colours red (R), yellow (Y), green (G), cyan (C), blue (B) or magenta (M) is assigned as the first colour associated with the colour region, and
    wherein two operating elements are provided, of which a first operating element is configured for selecting among the six first colours and a second operating element is for changing the at least one parameter for the colour selected by the first operating element.

**Revendications**

1. Caméra couleur ayant au moins une interface qui est adaptée pour régler, dans la caméra, au moins un paramètre par un utilisateur pour une correction de la saturation de couleur comme une première caractéristique d'un domaine de couleur (31) qui est associé à une première couleur choisissable parmi des couleurs primaires et secondaires (R, Y, G, C, B, M),
    ladite caméra couleur étant conçue pour choisir le domaine de couleur (31) en tant que gamme de valeurs dans un espace de couleurs défini par des couleurs primaires (R, G, B), par la proportion des parts de couleur primaire,
    ladite caméra couleur étant conçue pour modifier un vecteur de couleur (32, 33) à parts de couleur primaire (r, g, b), qui est associé à un pixel déterminé, en un vecteur de couleur corrigé,
    ladite caméra couleur étant conçue pour déterminer l'appartenance du vecteur de couleur au domaine de couleur à partir de la proportion des parts de couleur primaire,
    si ledit vecteur de couleur (32, 33) appartient au domaine de couleur, la modification en un vecteur de couleur corrigé étant réalisé par le fait que, lors d'un réglage du paramètre qui correspond à une augmentation de la saturation de couleur, la caméra couleur fait réduire les parts de couleur primaire du vecteur de couleur (32, 33) qui sont opposées à la première couleur, qui forment donc en mélange additif une deuxième couleur laquelle forme conjointement avec la première couleur une paire de couleurs complémentaires, et que, lors d'un réglage du paramètre qui correspond à une réduction de la saturation de couleur, elle fait augmenter les parts de couleur primaire du vecteur de couleur (32, 33) qui sont opposées à la première couleur,
    si le vecteur de couleur (32, 33) appartient au domaine de couleur, l'effet de la correction étant plus important pour les couleurs du vecteur de couleur qui présentent une plus faible distance de couleur par rapport à la première couleur, que pour les couleurs du vecteur de couleur qui présentent une plus grande distance de couleur par rapport à la première couleur, diminuant de façon continue avec une distance croissante de couleur et passant à zéro sur des limites intérieures du domaine de couleur,
    si ledit vecteur de couleur (32, 33) n'appartient pas au domaine de couleur, aucune correction du vecteur de couleur qui est liée au paramètre n'ayant lieu, et
    si la première couleur est une couleur primaire (R, G, B), le domaine de couleur étant choisi de manière à ce que la part de couleur primaire associée à cette couleur soit supérieure ou égale aux autres parts de couleur primaire et, si la première couleur est une couleur secondaire (Y, C, M), le domaine de couleur étant choisi de manière à ce que la part de couleur primaire opposée associée à cette couleur soit inférieure ou égale aux autres parts de couleur primaire.

2. Caméra couleur selon la revendication 1,
    le vecteur de couleur se composant d'une première part de couleur primaire f1, d'une deuxième part de couleur primaire f2 et d'une troisième part de couleur primaire f3, les parts de couleur primaire f1, f2 et f3 étant les composantes du vecteur de couleur dans un ordre désordonné,
    ladite caméra couleur étant conçue pour associer les parts de couleur primaire à des couleurs primaires individuelles de telle façon que soit f1 >= f2 >= f3,
    la première part de couleur primaire f1 étant associée à une première couleur primaire F1 et la première couleur primaire F1 étant associée au domaine de couleur correspondant par la valeur de la teinte.

3. Caméra couleur selon la revendication 2,
    ladite caméra couleur étant conçue pour modifier -dans le cas d'une correction de la saturation de couleur d'une première couleur primaire F1 à laquelle est associé le domaine de couleur par la proportion de ses parts de couleur primaire- le vecteur de couleur de telle sorte qu'une deuxième part de couleur primaire corrigée f2' du vecteur de couleur corrigé soit calculée avec une pondération dépendant de la valeur du paramètre, entre la deuxième part de couleur primaire f2 et la première part de couleur primaire f1,
ladite pondération étant définie comme une moyenne arithmétique pondérée de la forme

$$c = (1\text{-}alpha)^*a + alpha^*b$$

avec les grandeurs d'entrée a et b et le paramètre de pondération alpha, et
la gamme de valeurs du paramètre de pondération alpha allant au-delà de la plage de 0 à 1,
et que la troisième part de couleur primaire corrigée f3' soit calculée avec une pondération dépendant de la valeur du paramètre, entre la troisième part de couleur primaire f3 et la première part de couleur primaire f1,
une deuxième part de couleur primaire corrigée f2' du vecteur de couleur corrigé étant calculée comme

$$f2' = f2 + (1\text{-}dSR)^*(f1\text{-}f2)$$

et
une troisième part de couleur primaire corrigée f3' étant calculée comme

$$f3' = f3 + (1\text{-}dSR)^*(f1\text{-}f2),$$

où dSR est une valeur qui est déterminée par calcul à partir de la valeur du paramètre.

4. Caméra couleur selon la revendication 2,
une première couleur secondaire étant composée de manière additive de deux couleurs primaires F1 et F2 et ladite première part de couleur primaire f1 étant associée à la première couleur primaire F1 et la deuxième part de couleur primaire f2 étant associée à la deuxième couleur primaire F2, et
ladite caméra couleur étant conçue pour modifier -dans le cas d'une correction de la saturation de couleur de la première couleur secondaire SF1 à laquelle est associé le domaine de couleur par la proportion de ses parts de couleur primaire- le vecteur de couleur de telle sorte
qu'une troisième part de couleur primaire corrigée f3' du vecteur de couleur corrigé soit calculée avec une pondération dépendant de la valeur du paramètre, entre la troisième part de couleur primaire f3 et la première part de couleur primaire f1, ladite pondération étant définie comme une moyenne arithmétique pondérée de la forme

$$c = (1\text{-}alpha)^*a + alpha^*b$$

avec les grandeurs d'entrée a et b et le paramètre de pondération alpha, et la gamme de valeurs du paramètre de pondération alpha allant au-delà de la plage de 0 à 1,
une troisième part de couleur primaire corrigée f3' du vecteur de couleur corrigé étant calculée comme

$$f3' = f3 + (1\text{-}dSY)^*(f2\text{-}f3),$$

où dSY est une valeur qui est déterminée par calcul à partir de la valeur du paramètre.

5. Caméra couleur selon l'une quelconque des revendications précédentes,
ladite au moins une interface étant adaptée en outre pour régler, dans la caméra couleur, un deuxième paramètre pour une correction de la valeur de la teinte comme une deuxième caractéristique du domaine de couleur,
ladite caméra couleur étant en outre conçue pour modifier -dans le cas d'une modification du deuxième paramètre- le vecteur de couleur de telle sorte que la part de couleur primaire d'une deuxième couleur primaire opposée à la première couleur soit réduite et que la part de couleur primaire d'une troisième couleur primaire opposée à la première couleur soit augmentée,
la réduction et l'augmentation étant réalisée respectivement pour les couleurs du vecteur de couleur qui présentent une faible distance de couleur par rapport à la première couleur, et étant plus importante que pour les couleurs du vecteur de couleur qui présentent une plus grande distance de couleur par rapport à la première couleur.

**6.** Caméra couleur selon la revendication 5 et la revendication 2,
ladite caméra couleur étant conçue pour modifier -dans le cas d'une correction de la valeur de la teinte d'une première couleur primaire F1 à laquelle est associé le domaine de couleur- le vecteur de couleur de telle sorte qu'une deuxième part de couleur primaire corrigée f2' du vecteur de couleur corrigé soit calculée comme

$$f2 - dH1 * (f1-f2)$$

et
qu'une troisième part de couleur primaire corrigée f3' soit calculée comme

$$f3 + dH1 * (f1-f2),$$

où dH1 est une valeur qui est déterminée par calcul à partir de la valeur du deuxième paramètre.

**7.** Caméra couleur selon la revendication 5 et la revendication 2,
une première couleur secondaire étant composée de manière additive de deux couleurs primaires F1 et F2 et ladite première part de couleur primaire f1 étant associée à la première couleur primaire F1 et la deuxième part de couleur primaire f2 étant associée à la deuxième couleur primaire F2, et
ladite caméra couleur étant conçue pour modifier -dans le cas d'une correction de la valeur de la teinte de la première couleur secondaire SF1 à laquelle est associé le domaine de couleur- le vecteur de couleur de telle sorte qu'une première part de couleur primaire corrigée f1' d'un vecteur de couleur corrigé soit calculée comme

$$f1 - dH2 * (f2-f3)$$

et
qu'une deuxième part de couleur primaire corrigée f2' soit calculée comme

$$f2 + dH2 * (f2-f3),$$

où dH2 est une valeur qui est déterminée par calcul à partir de la valeur du deuxième paramètre.

**8.** Caméra couleur selon l'une quelconque des revendications précédentes,
ladite au moins une interface étant adaptée en outre pour régler, dans la caméra couleur, un troisième paramètre pour une correction de la brillance de couleur comme une troisième caractéristique du domaine de couleur,
ladite caméra couleur étant en outre conçue pour augmenter -dans le cas d'une modification du troisième paramètre qui est associée à une augmentation de la brillance de couleur - la valeur des couleurs primaires à partir desquelles peut être composée de manière additive la première couleur,
ladite augmentation étant respectivement plus importante pour les couleurs du vecteur de couleur qui présentent une faible distance de couleur par rapport à la première couleur, que pour les couleurs du vecteur de couleur qui présentent une plus grande distance de couleur par rapport à la première couleur.

**9.** Caméra couleur selon la revendication 8 et la revendication 2,
ladite caméra couleur étant conçue pour modifier -dans le cas d'une correction de la brillance de couleur d'une première couleur primaire F1 à laquelle est associé le domaine de couleur- le vecteur de couleur
en calculant une première part de couleur primaire corrigée f1' du vecteur de couleur corrigé, comme

$$f1 + dV1 * (f1-f2),$$

où dV1 est une valeur qui est déterminée par calcul à partir de la valeur du troisième paramètre.

10. Caméra couleur selon la revendication 8 et la revendication 2,
une première couleur secondaire SF1 étant composée de manière additive de deux couleurs primaires F1 et F2, et la première part de couleur primaire f1 étant associée à la première couleur primaire F1 et la deuxième part de couleur primaire f2 étant associée à la deuxième couleur primaire F2, et
ladite caméra couleur étant conçue pour modifier -dans le cas d'une correction de la valeur de la teinte de la première couleur secondaire SF1 à laquelle est associé le domaine de couleur- le vecteur de couleur de telle sorte qu'une première part de couleur primaire corrigée f1' du vecteur de couleur corrigé soit calculée comme

$$f1 + dV2 * (f2\text{-}f3)$$

et
qu'une deuxième part de couleur primaire corrigée f2' soit calculée comme

$$f2 + dV2 * (f2\text{-}f3),$$

où dV2 est respectivement une valeur qui est déterminée par calcul à partir de la valeur du troisième paramètre.

11. Caméra couleur selon l'une quelconque des revendications précédentes,
ladite caméra couleur étant conçue pour que l'effet qui est lié à une modification d'un paramètre, associée à la première couleur, pour la correction d'une caractéristique du domaine de couleur,
soit réduit de manière mathématiquement continue, avec une distance croissante de couleur du vecteur de couleur par rapport à la première couleur, ou
soit réduit proportionnellement à une fonction monotone continue de la différence de deux parts de couleur primaire du vecteur de couleur, ou
soit réalisé proportionnellement à une différence de deux parts de couleur primaire du vecteur de couleur,
de sorte que l'effet diminue de façon continue avec une distance croissante de couleur et passe à zéro sur des limites intérieures du domaine de couleur.

12. Caméra couleur selon l'une quelconque des revendications précédentes, dans laquelle
des moyens de réglage pour régler ledit au moins un paramètre sont prévus sur ladite interface,
six moyens de réglage sont prévus pour la correction dudit au moins un paramètre, auxquels est associée une couleur parmi six, le rouge (R), le jaune (Y), le vert (G), le cyan (C), le bleu (B) et le magenta (M) respectivement, comme la première couleur associée au domaine de couleur, et
deux éléments de commande sont prévus dont un premier élément de commande est conçu pour le choix parmi les six premières couleurs et un second élément de commande est conçu pour la modification dudit au moins un paramètre pour la couleur choisie par ledit premier élément de commande.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5668596 A
- US 6338692 B1
- US 2007121180 A1
- US 2006203297 A1
- US 2004263456 A1
- US 3971065 A
- US 5889554 A

**In der Beschreibung aufgeführte Nicht-Patentliteratur**

- **A. KOSCHAN ; M. ABIDI I.** Digital Color Image Processing. John Wiley & Sons, 2008